# EUROPÄISCHE PATENTSCHRIFT

(11) **EP 1 034 524 B1**
(45) Veröffentlichungstag und Bekanntmachung des Hinweises auf die Patenterteilung: **04.02.2004**
(21) Anmeldenummer: 98963355.7
(22) Anmeldetag: 09.11.1998
(51) Int. Cl.: G08G 1/09, H04Q 7/32

(54) **VERFAHREN ZUM ENDGERÄTSEITIGEN ABWICKELN MINDESTENS EINES AUF EINE SPEZIALAPPLIKATION, INSBESONDERE AUF EINEN VERKEHRSTELEMATIKDIENST BEZOGENEN VORGANGS**
METHOD FOR EXECUTING ON A TERMINAL AT LEAST ONE PROCEDURE BASED ON A SPECIAL APPLICATION, ESPECIALLY IN A TRAFFIC TELEMATIC SERVICE
PROCEDE POUR LE DEROULEMENT, A UN POSTE TERMINAL, D'AU MOINS UN PROCESSUS SE RAPPORTANT A UNE APPLICATION SPECIALE, NOTAMMENT A UN SERVICE DE TELEMATIQUE DE TRAFIC, ET CARTE POUR LA MISE EN OEUVRE DE CE PROCEDE

(30) Priorität: 28.11.1997 DE 19754768; 08.04.1998 DE 19816575
(43) Veröffentlichungstag der Anmeldung: 13.09.2000
(73) Patentinhaber: ATX Europe GmbH, 40547 Düsseldorf (DE)
(72) Erfinder: AENGENENDT, Paul, D-40477 Düsseldorf (DE); FRANKE, Andreas, D-59581 Warstein (DE); MÖHLENKAMP, Klaus, D-40545 Düsseldorf (DE); VIEWEG, Stefan, D-40547 Düsseldorf (DE); WICHURA, Torsten, D-40547 Düsseldorf (DE)
(74) Vertreter: Meissner, Peter E., Dipl.-Ing.
(86) Internationale Anmeldenummer: PCT/DE1998/003373
(87) Internationale Veröffentlichungsnummer: WO 1999/028884

(56) Entgegenhaltungen:
- EP-A- 0 748 135
- WO-A-97/34431

## Beschreibung

Die Erfindung betrifft ein Verfahren zum endgerätseitigen Abwickeln mindestens eines auf eine Spezialapplikation, insbesondere auf einen Verkehrstelematikdienst bezogenen Vorgangs und eine Karte zum Durchführen des Verfahrens.

Ein in einem Fahrzeug mitführbares Verkehrstelematik-Endgerät empfängt interaktiv oder als reiner Empfänger die Verkehrssituation, Routenvorschläge etc. repräsentierende Daten über einen privaten (wie GSM-SMS) oder öffentlichen (wie DAB, RDS-TMC) Kommunikationskanal von mindestens einer Verkehrstelematik-Zentrale. Ein Verkehrstelematik-Endgerät zum Empfang von (zumindest auch) Verkehrsdaten über einen privaten Mobilfunk-Kommunikationskanal kann neben einem Mobilfunkmodul weitere verkehrstelematikbezogene Komponenten, wie ein Display, Sprach-Ein-/-Ausgabe, ein Positionserfassungsmodul etc., umfassen; ein derartiges Verkehrstelematik-Endgerät ist jedoch relativ aufwendig und kostenintensiv. Ferner ist es möglich, ein Verkehrstelematik-Endgerät mit den funktionsabhängig erforderlichen Komponenten, wie optische bzw. akustische Ein- und Ausgabe, Ortserfassung etc. ohne Mobilfunk-Kommunikationseinheit auszubilden und dieses Verkehrstelematik-Endgerät über eine Schnittstelle im Bedarfsfall an ein Mobilfunk-Telefon (Handy) anzuschließen, was gegenüber einem Telematikendgerät mit integriertem, ausschließlich hierfür zu verwendenden Mobilfunk-Telefon kostengünstiger ist; die Schnittstelle zwischen dem Mobilfunkgerät und dem Verkehrstelematik-Endgerät bedingt die Gefahr von Mißbrauch der (zu vergebührenden, nur bestimmten Teilnehmern zugänglichen) Daten durch Eingriff in die Verkehrstelematik-Endgeräte oder die Schnittstelle und eine Inflexibilität des Dienstezugangs sowie eine aufwendige Personalisierung eines Verkehrstelematik-Endgerätes (= Individualisierung eines Verkehrstelematik-Endgerätes für einen berechtigten Benutzer/Subscriber von Verkehrstelematik-Diensten). Hinsichtlich der Sicherheitsproblematik ist eine Auslagerung von Sicherheitsfunktionen in eine eigene Verkehrstelematik-Karte für das Zusatzgerät möglich, was jedoch einen separaten Kartenleser erfordert, der Nachteile, wie erhöhte Kosten etc., mit sich bringt.
Die EP 0 748 135 A2 offenbart die Verwendung einer SIM-Karte für die Speicherung von Kontoinformationen des Karteninhabers sowie die Möglichkeit der Ausführung eines Programms auf einer SIM-Karte.

Aufgabe der Erfindung ist hiervon ausgehend eine möglichst einfache, universelle, personalisierbare, fehlerunanfällige, kostengünstige, flexible Ausbildung eines endgerätseitigen Verfahrens und/oder einer zugeordneten Vorrichtung. Die Aufgabe wird durch die unabhängigen Ansprüche gelöst.

Die Verwendung einer erfindungsgemäßen Karte, insbesondere Mobilfunk-Teilnehmeridentifizierungskarte zum endgerätseitigen Abwickeln verkehrstelematikbezogener Vorgänge, insbesondere als Programm, auf der Karte und/oder unter Ablauf eines Programms mit einem Prozessor auf der Mobilfunk-Teilnehmer-Identifizierungskarte ermöglicht sehr kostengünstig, flexibel, zuverlässig, mißbrauchssicher und (bei Neuerungen) einfach aktualisierbar die endgerätseitige Nutzung von durch eine Verkehrstelematik-Zentrale an einen berechtigten Nutzer (Subscriber) über ein Mobilfunknetz ausgesendeten Daten zu einer Spezialapplikation, insbesondere Verkehrstelematik-Applikation. Neben Verkehrstelematik-Applikationen können auch weitere Spezialapplikationen alternativ oder zusätzlich (in einer Zahl Größe > = 2) auf einer Mobilfunk-Teilnehmer-Identifizierungskarte gespeichert sein und ablaufen; dies können insbesondere Geldkarten-Spezialapplikationen, Telefonkarten ersetzende Spezialapplikationen etc. sein.
Die Zentrale kann insbesondere eine Verkehrstelematikzentrale sein. Die Daten können insbesondere Verkehrsdaten sein.
Die Karte kann beispielsweise eine SIM-Karte (Subscriber-Identity-Module) eines Teilnehmers eines GSM-Mobilfunknetzes sein; in anderen Mobilfunknetzen kann die Mobilfunk-Teilnehmer-Identifizierungskarte jeweils dem Standard für eine Teilnehmerkarte eines Mobilfunk-Teilnehmers des jeweiligen Mobitfunknetzes entsprechen.

Bei einer Mobilfunk-Teilnehmer-Identifizierungskarte gemäß dem aktuellen GSM-Standard ist bei der Realisierung der Erfindung problematisch, daß in eine Mobilfunk-Karte zwar (mit einem standardisierten "update record command") Daten in den Speicherbereich jeder Karte geschrieben bzw. (mit einem "read record command") aus einer Karte ausgelesen werden können, daß jedoch ein Aufruf von Funktionen zusätzlicher Applikationen im Befehlssatz nicht vorgesehen ist; insbesondere ist keine Möglichkeit in derzeit standardisierten GSM-Karten vorgesehen, GSM-befehlssatzfremde benutzerspezifische Funktionen auf der Karte auszuführen, Daten über eine Remote-Schnittstelle (TERMINAL ADAPTER/TERMINAL EQUIPMENT/MOBILE EQUIPMENT etc.) explizit an eine Funktion auf der SIM-Karte zu übergeben oder den für eine Karten-Funktion zur Verfügung stehenden Speicherbereich als Ein-/Ausgabemöglichkeit für Spezialapplikationen ohne Beeinflussung einer ursprünglichen Applikation zu nutzen. Deshalb ist eine Realisierung der Erfindung mit einer speziellen, (zu bisherigen Karten) aufwärtskompatiblen SIM-Karte zweckmäßig, welche von einem Mobilfunk-Telefon in die darin enthaltene Karte eingehende Daten in Abhängigkeit von der Art der Daten weiterleitet an (bisher übliche bzw. normierte) Standard-Mobilfunk-Funktionen oder bei spezialapplikationsbezogenen Daten an davon betroffene Spezialapplikationen, insbesondere auf der Karte als Programm angeordneten Spezielapplikationen; die Weiterleitung kann insbesondere in Abhängigkeit von (verkehrszentralenseitig und kartenseitig übereinstimmend vorgegebenen) Identifikations-Datensequenzen in eine Mobilfunk-Teilnehmer-Identifikatiions-Karte eingehenden Daten erfolgen, insbesondere aufgrund einer Identifikations-Datensequenz in den Nutzdaten und/oder in der PID eines TDPU-Rahmens eines vom Mobilfunk-Telefon kommend in eine darin enthaltene Karte eingehenden Bit-Stroms. Bei einer Karte gemäß anderen Standards oder künftig kommenden GSM-Standards kann ein derartiger Router auch standardisiert vorgesehen werden. Da auf Standard-Mobilfunk-Funktionen bezogene Daten an Standard-Mobilfunk-Funktionen weitergeleitet werden, entsteht bezüglich dieser Daten keine relevante Veränderung in der Weiterbehandlung verglichen mit der Behandlung in einer bisherigen herkömmlichen Karte.

Ebenso wie Verkehrsdaten können auch auf andere Applikationen bezogene Daten übertragen werden.

Die Daten sind insbesondere binäre oder alphanumerische Daten, wie Kurznachrichten (z.B. im GSM-Standard GSM-SMS). In anderen Standards ist auch die Übertragung von Textdaten als anders aufgebaute Kurznachrichten möglich. Auch ist eine Übertragung von insbesondere alphanumerischen oder binären Daten in akustischer Form entsprechend einem Modem möglich.

Das erfindungsgemäße Verfahren ist insbesondere derart ausgebildet, daß eine Karte zusammen mit einem Mobilfunk-Telefon, in welchem sie eingelegt ist, autark eine endgerätseitige Abwicklung erforderlicher verkehrstelematikdienstbezogener Vorgänge ermöglicht. Da hierzu standardisierte Mobilfunk-Telefone ohne Änderungen verwendbar sein sollen, sind alle erforderlichen Einrichtungen auf der Karte auszubilden, insbesondere (bei derzeit üblichen Karten) als Programm, insbesondere als Programm in einem EEPROM etc. auf der Karte, zu speichern. Eine derartige Karte wird durch Einfügung in ein standardisiertes Mobilfunk-Telefon zusammen mit diesem zu einem eigenständigen Verkehrstelematik-Endgerät. Die Karte ist dabei einfach und kostengünstig herstellbar, was einen sehr einfachen Zugang für potentielle Benutzer zu Verkehrstelematik-Diensten ermöglicht.

Nach einer Ausgestaltung der Erfindung ist ein Programm in der Karte, derart ausgebildet, daß zusätzlich zu oder alternativ zu einem autarken Betrieb der Karte (mit einem Mobilfunk-Telefon) ein Betrieb der Karte (mit einem Mobilfunk-Telefon und) mit einem Verkehrstelematik-Zusatzgerät oder mehreren Verkehrstelematik-Zusatzgeräten möglich ist. Insbesondere kann an ein Mobilfunk-Telefon, in welches die Karte einlegbar ist, über eine am Mobilfunk-Telefon vorhandene Schnittstelle ein Verkehrstelematik-Zusatzgerät anschließbar sein. Dieses Verkehrstelematik-Zusatzgerät kann aktiv oder passiv arbeiten. Das Verkehrstelematik-Zusatzgerät kann von der Karte gesteuert werden und beispielsweise nur ein anschließbares Display, eine Spracheingabe, eine Sprachausgabe, ein Positionserfassungssystem, ein Anschluß an eine Schnittstelle im Fahrzeug oder eine Kombination dieser Möglichkeiten sein.

Das gespeicherte Programm auf der Karte, ist zweckmäßig so ausgebildet, daß die Karte auf vorhandene, insbesondere standardisierte, Standard-Mobilfunk-Teilfunktionen eines Mobilfunk-Telefons (in welches die Karte einlegbar ist) zum endgerätseitigen Abwickeln eines verkehrstelematikbezogenen Vorgangs zugreift. Insbesondere kann die Karte oder das Programm auf der Karte zugreifen auf Ausgabefunktionen und/oder Vorrichtungen des Mobilfunkgerätes und/oder auf Eingabe-Funktionen und/oder Vorrichtungen des Mobilfunk-Telefons (insbesondere die Tastatur des Telefons), auf Menü-Ausgabe-Funktionen und/oder Vorrichtungen des Mobilfunk-Telefons und/oder auf weitere, insbesondere standardisiert vorhandene Standard-Mobilfunk-Teilfunktionen des Mobilfunk-Telefons. Die Kommunikation zwischen der Karte und dem Mobilfunk-Telefon (in welchem die Karte aufnehmbar ist) kann in der Karte, insbesondere in einem Programm in der Karte, so realisiert sein, daß Daten und/oder Befehle über vorhandene Schnittstellen zwischen der Karte und dem Mobilfunk-Telefon, insbesondere nach vorgegebenen Formaten/Prozeduren ausgetauscht werden. Bei einem Aufbau gemäß dem GSM-Standard sind für Spezialapplikationen, insbesondere verkehrstelematikdienstbezogene Applikationen auf der SIM-Karte (über die Schnittstelle von der Karte zum Mobilfunk-Telefon), insbesondere MMI (Man Machine Interface)-Kommandos, sowie die Übermittlung von Befehlen/Nutzdaten zu Verkehrstelematik-Zusatzgeräten über die TE (terminal equipment)-Schnittstelle möglich. Für eine Karte, die bzw. deren Programm so ausgebildet ist, daß auf der Karte alle spezialapplikationsbezogenen, insbesondere verkehrstelematikdienstbezogenen Vorgänge autark (mit einem Mobilfunk-Telefon, in welches die Karte einlegbar ist) ablaufen können, insbesondere auch alle Ausgabefunktionen und - falls erforderlich - Eingabefunktionen, ist eine Ausbildung der Karte und/oder des Verfahrens mit integrierten Sicherheitsfunktionen vorteilhaft. Als integrierte Sicherheitsfunktionen können insbesondere die Einbringung von Schlüsseln in die SIM-Karte über ein Mobilfunk-Telefon-Interface oder über Funk, die Entschlüsselung von (über das Mobilfunk-Telefon) in die Karte eingehenden (von einer Verkehrstelematik-Zentrale gesendeten) Nutz-Daten, wie Verkehrstelematik-Daten, und/oder Code-Abfragen vom Benutzer der Karte (bzw. des Mobilfunktelefons, in welches die Karte eingelegt ist) für die Zugangsberechtigung zu Verkehrsdaten einer Verkehrszentrale realisiert werden. Ein erfindungsgemäß auszuführender Vorgang kann ein in einem der Unteransprüche definierter Vorgang sein.

Weitere Merkmale und Vorteile der Erfindung ergeben sich aus den Unteransprüchen und der nachfolgenden Ausführungsbeispielsbeschreibung. Dabei zeigt
- Fig. 1: ein herkömmlich aufgebautes Verkehrstelematik-Endgerät und dessen Kommunikation über ein daran anschließbares Mobilfunk-Telefon und ein Mobilfunknetz mit einer Verkehrstelematik-Zentrale,
- Fig. 2: eine erfindungsgemäße, in ein Mobilfunk-Telefon einschiebbare Karte und die Kommunikation der Karte über ein Mobilfunk-Telefon per Mobilfunk mit einer Verkehrstelematik-Zentrale und evtl. mit einem externen Verkehrstelematik-Zusatzgerät,
- Fig. 3: grob abstrahiert den Aufbau der Karte,
- Fig. 4: Funktionsblöcke des Programms auf der Karte,
- Fig. 5: grob abstrahiert die Weiterleitung von (über ein Mobilfunk-Telefon) in die Karte eingehenden Daten über einen Router zu verschiedenen Applikationen,
- Fig. 6: den Datenfluß in einer Karte zu Funktionen und Speicherbereichen mehrerer Applikationen,
- Fig. 7: das Routing von (über ein Mobilfunk-Telefon in eine) Karte eingehenden Daten durch Bits im eingehenden Bit-Datenstrom,
- Fig. 8: eine Geräteverschaltung bei Verwendung eines aktiven Verkehrstelematik-Zusatzgerätes.
- Fig. 9: eine beispielhafte Befehlsliste für die Kommunikation zwischen einem Verkehrstelematik-Endgerät und einem Zusatzgerät.

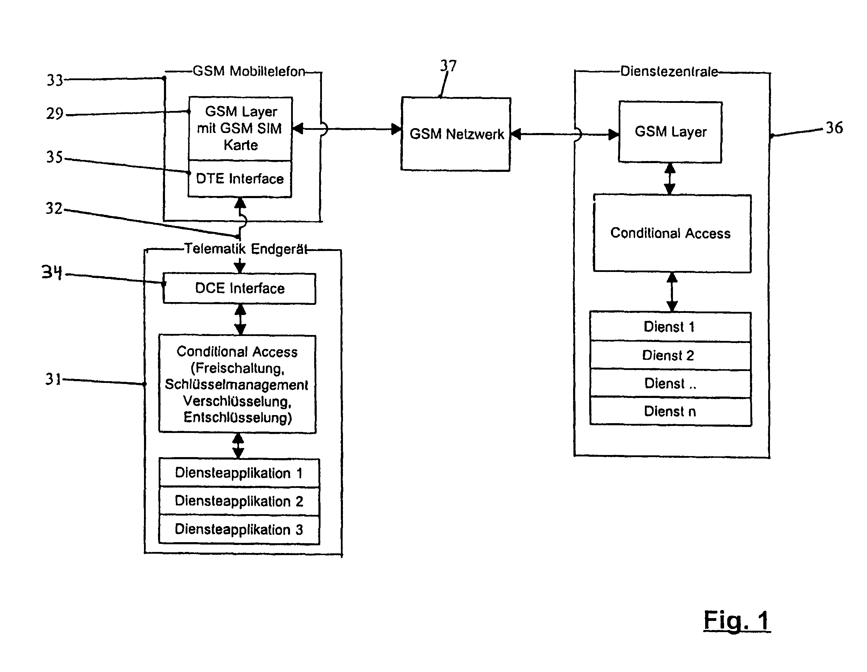

Mit dem in Figur 1 dargestellten herkömmlichen Verkehrstelematik-Endgerät 31 ist gemäß dem Stand der Technik über die Schnittstelle 32 ein Mobilfunk-Telefon 33 (gemäß GSM-Standard) verbunden. Für den Datenaustaustausch zwischen dem herkömmlichen Telematik-Endgerät 31 und dem Mobilfunk-Telefon 33 ist auf seiten des Verkehrstelematik-Endgerätes 31 ein DCE-Interface 34 und auf seiten des Mobilfunk-Telefons 33 ein herkömmliches standardisiertes DTE-Interface 35 vorgesehen. Die Kommunikation zwischen dem eine SIM-Karte 29 enthaltenden Mobilfunk-Telefon 33 und einer Verkehrstelematik-Dienstleisturigszentrale 36 erfolgt per Mobilfunk 37, hier über ein standardisiertes GSM-Netzwerk. Von der Verkehrstelematik-Zentrale 36 per Mobilfunk 37 ausgesandte Daten werden vom Mobilfunk-Telefon 33 empfangen und über das DTE-Interface an das Telematik-Endgerät durchgereicht. Im Telematik-Endgerät 31 laufen verkehrstelematikbezogene Vorgänge, wie Freischaltung des Endgerätes, Schlüsselmanagement, Verschlüsselung von vom Telematik-Endgerät 31 an die Dienstzentrale 36 zu sendenden Daten/Anfragen, Entschlüsselung von von der Dienstzentrale 36 ausgesandten (37) Verkehrsdaten sowie die Teilprogramme zu verschiedenen Diensten, also Diensteapplikationen 1 bis 3 ab.

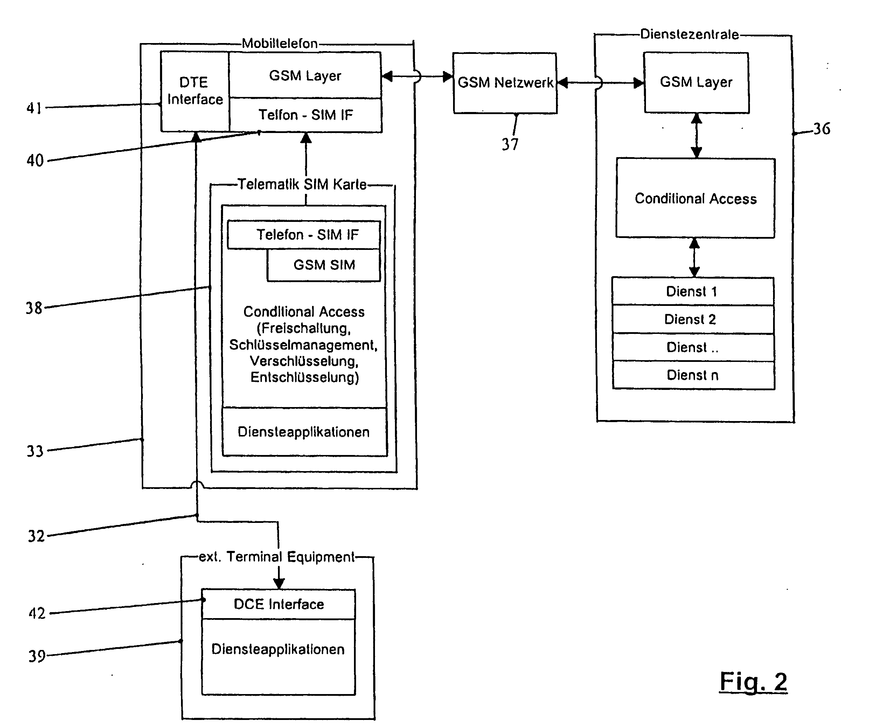

Figur 2 verdeutlicht hingegegen die erfindungsgemäße Realisierung mit einer Verkehrstelematik-SIM-Karte 38, die in der Darstellung in Figur 2 (ebenso wie die herkömmliche GSM-SIM-Karte 29 in Figur 1) in ein Mobilfunk-Telefon 33 herkömmlicher Bauart eingelegt ist.

Nachfolgende Erläuterungen zum Beispiel von Telematik-Spezialapplikationen auf einer Karte beziehen sich jeweils auch auf andere Spezialapplikationen.

Die Karte 38 ist abwärtskompatibel zu einer herkömmlichen SIM-Karte 29; dies bedeutet, daß herkömmliche Standard-Mobilfunk-Funktionen inklusive der Behandlung von nicht-spezialapplikationsbezogenen Kurznachrichten in der erfindungsgemäßen Karte 38 ebenso ablaufen wie bei einer herkömmlichen Karte 29, indem sie an die jeweils (wie bisher) zuständigen Standard-Mobilfunk-Funktionen auf der Karte 38 bzw. im Mobilfunk-Telefon 33 weitergeleitet werden.

Auch in Figur 2 werden über ein Mobilfunknetz 37 (zum Beispiel ein GSMstandardisiertes Mobilfunknetzwerk 37) zwischen der Verkehrstelematik-Zentrale 36 und der Endgerätseite (hier 33, 38) Daten übertragen. Eine Alternataive besteht darin, daß vom Mobilfunk-Telefon 33 (in dem die erfindungsgemäße Karte 38 eingelegt ist) lediglich Daten empfangen werden, welche die Verkehrstelematik-Zentrale 36 aussendet 37, insbesondere als Kurznachricht (z.B. GSM-Cellbroadcast-SMS) aussendet. Alternativ oder zusätzlich ist es möglich, daß über das Mobilfunknetz 37 interaktive Kommunikation zwischen dem Mobilfunk-Telefon und der erfindungsgemäßen Karte 38 einerseits und der Verkehrstelematik-Zentrale 36 andererseits erfolgt, indem von der Endgeräteseite 33, 38 beispielsweise Daten von der Verkehrstelematik-Zentrale 36 angefragt werden und/oder indem Daten (z.B. fahrzeugbezogene Informationen) von der Endgeräteseite 33, 38 an die Verkehrstelematik-Zentrale 36 übertragen (37) werden.
Ein Vorteil der erfindungsgemäßen Ausgestaltung gemäß Figur 2 liegt darin, daß auf der Verkehrstelematik-SIM-Karte 38 Funktionen als Programm implementiert sind, welche vollständig oder teilweise endgerätseitige Vorgänge abwickeln.

Gemäß dem dargestellten Beispiel ist es möglich, lediglich mit einem herkömmlichen Mobilfunk-Telefon 33 und einer erfindungsgemäßen (ins Mobilfunk-Telefon 33 eingelegten) Karte 38, alle jeweils erforderlichen Vorgänge für eine (oder mehrere) insbesondere verkehrstelematikdienstbezogene Spezialapplikation endgerätseitig abzuwickeln, also mit dem Mobilfunk-Telefon und der darin eingelegten Karte autark ein Verkehrstelematik-Endgerät zu bilden. Dies ermöglicht einen einfachen, kostengünstigen Zugang zu insbesondere Verkehrstelematik-Funktionen. Neben Verkehrstelematik-Diensten sind weitere Spezialapplikationen, wie eine virtuelle Geldkarte, Kontoführungen etc. auf der Karte implementierbar, um derart ein auch für diese Spezialapplikationen geeignetes autarkes Endgerät durch ein herkömmliches Mobilfunk-Telefon und eine erfindungsgemäße Karte 38 zu schaffen.

Zur Unterstützung von Teilfunktionen kann an das Mobilfunk-Telefon 33 über die herkömmliche Schnittstelle 32 ein Zusatzgerät, insbesondere Verkehrstelematik-Zusatzgerät 39 anschließbar sein. Dieses Zusatzgerät kann insbesondere ein Display und/oder eine Spracheingabe- und/oder eine Sprachausgabe- und/oder eine Positionserfassungs-Einrichtung und/oder weitere Funktionen beinhalten. Falls eine Kommunikation zwischen der Karte 38 und dem Zusatzgerät 39 erforderlich ist, erfolgt sie über eine Karten-Schnittstelle 40 des Mobilfunk-Telefons 33 und über eine Schnittstelle 41 des Mobilfunk-Telefons 33 zur externen Schnittstelle (DCE-Interface 42) des Zusatzgerätes 39.

Die endgerätseitige Abwicklung spezialapplikationsbezogener, insbesondere verkehrstelematikdienstbezogener Vorgänge, wie der Anforderung oder des Empfangs oder der Dekodierung oder der Darstellung oder der Weiterreichung von von der Zentrale 36 ausgesandten oder an diese gerichteten Daten, in der Karte 38 erfolgt unter Einsatz von auf der Karte 38 standardisiert (beispielsweise gemäß GSM-Standard) oder/und auf dem Mobilfunk-Telefon 33 standardisiert (gemäß GSM-Standard etc.) vorhandenen Teilfunktionen. Derartige Teilfunktionen können insbesondere man-machine-interface-Funktionen (= MMI-Funktionen), wie eine Display-Ausgabe auf dem Display des Mobilfunk-Telefons, eine Abfrage von der Tastatur des Mobilfunk-Telefons, die Verwendung der Menüstruktur des Mobilfunk-Telefons etc. sein.

Zugangsberechtigungsbezogene Vorgänge können insbesondere im Programm auf der SIM-Karte integriert sein. Dies sind insbesondere die Freischaltung einer Karte 38, das Schlüsselmanagement in der Karte 38, die Entschlüsselung von Daten, die die Karte (ausgesandt von der Zentrale 36 per Mobilfunk 37 über das Mobilfunk-Telefon 33 zur Karte 38) erhält und die Verschlüsselung von Daten, die von der Karte 38 (über das Mobilfunk-Telefon 33 per Mobilfunk 37) als Anfrage etc. an die Dienstzentrale 36 senden soll.

Wenn sich alle zugangsberechtigungsbezogenen Vorgänge auf der Karte 38 befinden, ist die Karte selbst ausgebildet für die Spezialapplikation, insbesondere Verkehrstelematikdienst-Applikation, so daß keine Subskription oder Dienst-Anpassung von extern an das Mobilfunk-Telefon 33 anschließbaren (32) Zusatz-Geräten 39 an bestimmte Dienste erforderlich ist; damit sind Zusatzgeräte 39, wie Displays, Spachein-/-ausgabe, Positionserfassungsgeräte (z.B. GPS) etc. ohne Veränderung oder Anpassung an einen bestimmten gebuchten Dienst sehr universell verwendbar. Insbesondere kann vorgesehen sein, daß die angeschlossen Geräte Datenströme zum und vom Dienste-Anbieter unverschlüsselt senden bzw. empfangen.

Bei Implementierung zugangsbezogener endgerätseitiger Vorgänge (wie Entschlüsselung, Schlüsseleinbringung, Verschlüsselung) allein auf der erfindungsgemäßen Karte 38 ist die Spezialapplikations-Subskription, insbesondere Verkehrstelematikdienst-Subskription, automatisch eindeutig dem Besitzer einer Mobilfunk-Karte 38 (hier einer GSM-SIM-Karte) zugeordnet, so daß eine einfache personenbezogene Abrechnung von auf Spezialapplikationen, insbesondere auf Verkehrstelematikdienste bezogenen Kosten erfolgen kann. Ferner kann bei kontobezogenen und/oder geldkartenbezogenen Vorgängen eine relativ sichere Identifikation eines Benutzers und eine Abrechnung für den Benutzer erfolgen. Ferner ist mit nur einer Subskription eines Benutzers eine Benutzung von Spezialapplikatiönen, insbesondere Verkehrstelematikdiensten, in endgerätseitig unterschiedlichen Konstellationen möglich; z.B. sind endgerätseitig im Zusammenhang mit einer erfindungsgemäßen Karte 38 die Konstellationen Mobilfunk-Telefon außerhalb eines Fahrzeuges, Mobilfunk-Telefon mit einem PC bzw. PDA bzw. Mobilfunk-Telefon im Fahrzeug möglich.

Die Implementierung des erfindungsgemäßen Verfahrens auf einer Karte (38), insbesondere einer SIM-Karte, erstreckt die kartenbezogenen (gemäß GSM-Standard SIM-kartenbezogenen) Sicherheitseinrichtungen und Sicherheitsvorgänge automatisch auf die Spezialapplikationen, insbesondere Verkehrstelematikdienste. Insbesondere ergibt sich dadurch eine Diebstahlsicherung für die Spezialapplikations-Berechtigung bzw. - dienstedaten in Verbindung mit einem oder mehreren PIN-Codes einer SIM-Karte.

In der Variante Karte plus Mobilfunk-Telefon ohne Zusatzgerät (s. oben), insbesondere ohne externes Terminal, ist eine erfindungsgemäße Karte 38 insbesondere auch für die Ausgabe von Broadcast-Dienst-Daten, also von unidirektional, nicht interaktiv von der Zentrale 36 ausgesendeten Daten nutzbar. Auch ist eine Aktualisierung von zugangsbezogenen Daten ohne Anschluß eines externen Terminals mit der Konstellation Mobilfunk-Telefon plus erfindungsgemäße Karte 38 möglich, was eine schnelle Schlüsselaktualisierung ermöglicht. Beispielsweise können bei jeder Einbuchung eines Mobilfunk-Telefons 33 mit einer erfindungsgemäßen Karte 38 darin in ein Mobilfunknetz (insbesondere GSM-Netz) zugangsbezogene Daten aktualisiert werden.

Die Karte 38 ist einfach und wegen der niedrigen Herstellungskosten kostengünstig im Falle von Defekten etc. austauschbar.

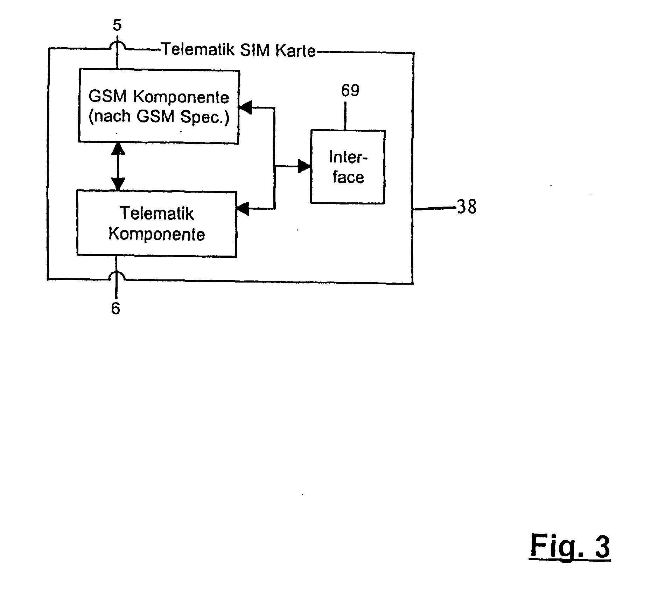

Figur 3 verdeutlicht das zugrundeliegende Prinzip der Realisierung eines erfindungsgemäßen Verfahrens in einer Karte 38. Daten, welche beispielsweise eine Zentrale (36) per Mobilfunk (37) an ein Mobilfunk-Telefon (33) sendet, gelangen intern über eine Schnittstelle 9 vom Mobilfunk-Telefon und in eine darin eingelegte Karte 38. Ebenso können Daten, wie beispielsweise Anfragen, von der erfindungsgemäßen Karte 38 (über die Schnittstelle 9 das Mobilfunk-Telefon und per Mobilfunk 37) an eine Zentrale 36 gesendet werden.

Die Kommunikation zwischen der Karte (in einem Mobilfunk-Telefon) und einer Zentrale 36 kann unidirektional (beim kartenseitigen Empfang von ausgestrahlten Broadcast-Daten der Dienstzentrale) oder bidirektional (interaktiv) zwischen der Karte und der Zentrale erfolgen.

Auf der Karte 38 sind eine Standard-Mobilfunk-Funktion-Komponente (hier als GSM-Komponente bezeichnet) 5 und eine spezialapplikationsbezogene Komponente (hier als Telematik-Komponente bezeichnet) vorgesehen. In der GSM-Komponente werden herkömmliche GSM-bezogene Vorgänge abgewickelt. In der Telematik-Komponente werden spezialapplikationsbezogene, hier verkehrstelematikdienstbezogene Vorgänge abgewickelt; dabei greift die Telematik-Komponente auf die GSM-Komponente zu, insbesondere zur Ausgabe auf einem Display des Mobilfunk-Telefons zur Eingabe über die Mobilfunk-Telefon-Tastatur, hinsichtlich der vorhandenen Menüstruktur etc.

Die Funktionen der GSM-Komponente 5 entsprechen der derzeit derzeit gültigen GSM-Spezifikation 11.11, "Specification of the Subscriber Identity Module - Mobile Equipment (SIM - ME) Interface". Diese umfassen z.B. Speicher für Sicherheitscodes, Telefonbücher, Telefoneinstellungen sowie Funktionen zur Abwicklung von GSM-Prozeduren. Das Interface 69, welches die Schnittstelle von der Karte 38 zum Mobilfunk-Telefon 33 bildet, ist ebenfalls in diesem Standard beschrieben, der durch diesen Bezug Teil dieser Anmeldung ist. Künftig wird die GSM-Komponente an künftige Standards angepaßt sein. Außereuropäisch ist die GSM-Komponente dortigen Standards angepaßt, wie z.B. US- oder JP-Standards.

Die Telematik-Komponente 6 der Karte 38 enthält verkehrstelematikbezogene Funktionen, wie zugangsberechtigungsbezogene (Freischaltung und/oder Schlüsselmanagement und/oder Verschlüsselung und/oder Entschlüsselung), Funktionen, Aufbau und Betrieb eines Kommunikationskanals 32 zu einem Verkehrstelematik-Zusatzgerät 39 und Teilprogramme zu Diensten für Applikationen auf der Telematik-SIM-Karte.

Zwischen den Komponenten 5, 6, 69 werden Daten und Befehle (Anweisungen) ausgetauscht. Die Telematik-Komponente 6 und die GSM-Komponente 5 sind beide integriert auf einer Telematik-Karte 38 untergebracht und empfangen und/oder senden Daten über das von beiden zugreifbare Interface 69.

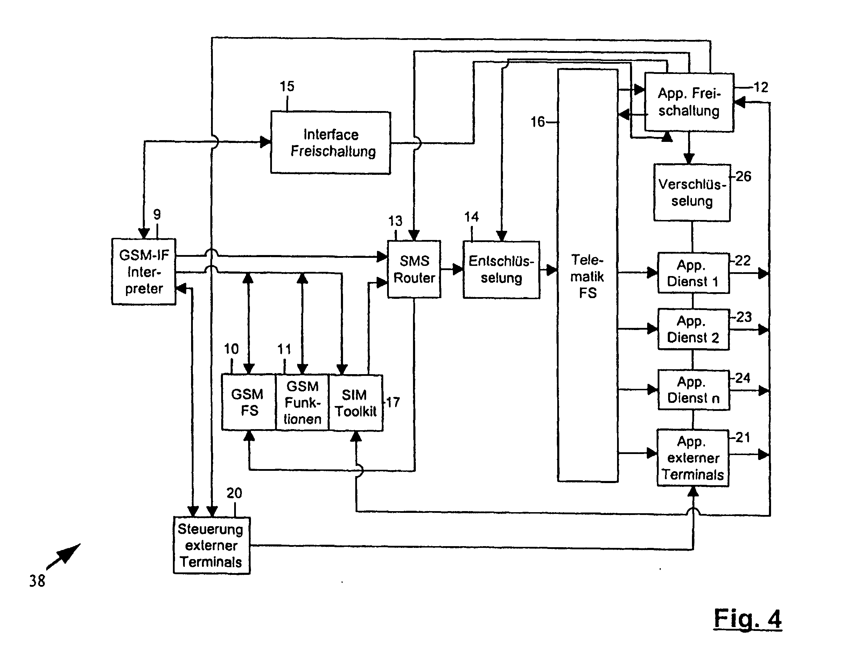

Figur 4 verdeutlicht die Funktionen (hier Teilprogramme) der Karte 38.

Im GSM-Filesytem 10 werden Daten gespeichert. Hierbei handelt es sich z.B. um Telefonbucheinträge, Kurznachrichten und Netzwerkinformationen. Im Block GSM Funktionen sind Programme untergebracht, die vom Telefon nach Aufforderung ausgeführt werden. Hierzu gehört beispielsweise die Prozedur zur Autorisierung der SIM-Karte 38 im GSM-Netz (37).

Falls die SIM-Karte 38 ein SIM-Toolkit 17 aufweist, bietet dieses der SIM-Karte 38 spezielle Möglichkeiten, mit dem Mobilfunk-Telefon 33 zu kommunizieren. Es unterstützt folgende Funktionen:

Bei einer Initialisierung werden zwischen dem Toolkit und dem Mobilfunk-Telefon Informationen über dessen Fähigkeiten mit dem Mobilfunk-Telefon ausgetauscht. Ferner kann das SIM-Toolkit Aktionen durch das Mobilfunk-Telefon 33 initiieren, wie z.B. das Senden einer Kurznachricht (SM), das Anzeigen von Texten, die Wiedergabe von Tönen etc.

Des weiteren erlaubt das SIM-Toolkit das Herunterladen von Daten (Data Download) vom Mobilfunk-Telefon oder vom Toolkit in die Karte 38 per Luftschnittstelle. Außerdem ermöglicht das Toolit der SIM den Zugriff auf Menüfunktionen des Mobilfunk-Telefons.
Eine weitere Funktion des Toolkits ist der Aufbau der Sprachkommunikation mittels der SIM.
Insbesondere die Möglichkeiten zum Senden von Kurznachrichten sowie die Möglichkeiten zur Nutzung der MMI (Man Machine Interface)-Funktionen des Mobilfunk-Telefons 33 sind für (GSM-SMS) Spezialapplikationen, insbesondere Telematik-Apptikationen 22, 23, 24 sehr vorteilhaft nutzbar. Hierzu ist es jedoch erforderlich, daß die sowohl Telematik-SIM-Karte 38 als auch das Mobilfunk-Telefon 33 die entsprechenden SIM -Toolkit-Funktionen im geforderten Umfang unterstützen. Da dies jedoch nicht bei allen Telefonen gewährleistet ist, unterstützt die Telematik-SIM-Karte 38 auch alternative Modi zur Abwicklung der Telematik-Applikationen (siehe Abschnitt 0) für SIM-Karten ohne die erforderlichen Toolkit-Fähigkeiten. Die Ermittlung der jeweiligen Fähigkeiten erfolgt während der Initialisierung der SIM-Karte 38. In den nachfolgenden Beschreibungen wird davon ausgegangen, daß die für die Telematik Anwendungen erforderlichen Funktionen in der SIM-Karte 38 und im Mobilfunk-Telefon 33 implementiert sind.

Da die Telematik-Anwendungen auf der Karte über das Mobilfunk-Telefon durch Kurznachrichten (Point to Point) mit der Dienstzentrale 36 kommunizieren, müssen alle von der Zentrale gesendeten Kurznachrichten an die zugeordneten Applikationen (22, 23, 24) weitergeleitet werden.

Falls die Karte ein SIM-Toolkit aufweist, werden hierzu die Data Download Funktionen des SIM Toolkits genutzt. Data Download Nachrichten werden hier nicht im File EF_{SMS} des GSM Filesystems 10 gespeichert, sondern direkt an das SIM Toolkit und von dort an den Router 13 geleitet. Data Download Nachrichten sind von der Zentrale 36 besonders zu kennzeichnen. Dies erfolgt hier bei von der Zentrale an ein bestimmtes Endgerät ausgesandten Point-to-Point-Kurznachrichten über den Protokoll-Identifier und/oder das Data Coding Scheme (DSC) der Kurznachricht. Im Fall von Broadcast Nachrichten von der Zentrale 36 an alle Mobilfunk-Telefone (oder alle Mobilfunk-Telefone bestimmten Funkzellen) müssen die Identifier der Data-Download-Nachrichten dem Mobilfunk-Telefon bekannt sein. Diese Identifier sind im File EF_{CBMID} der SIM-Karte hinterlegt. Alternativ können auf der Karte als Cellbroadcast oder Pointto-Point eingehende Kurznachrichten auch durch die Umleitung von Schreibzugriffen auf das Filesytem EF_{SMS} an den Router 13 der Karte weitergeleitet werden.

Der Router 13 wird vom Funktionsblock Freischaltung 12 der Karte gesteuert und hat die Aufgabe Telematik-Kurznachrichten von anderen Kurznachrichten zu trennen. Alle in die Karte eingehenden Kurznachrichten, die sich (aufgrund ihrer Protocoll-Identifier und/oder Data-Coding-Scheme) nicht auf eine Spezialaplikation, wie auf einen verkehrstelematikbezogenen Ablauf (Applikationen zu Diensten 21 bis 24, 26, 12) beziehen, werden in das File EF_{SMS} des GSM Filesystems 10 weitergeleitet und dort wie herkömmliche Kurznachrichten herkömmlich in Standard-Mobilfunk-Funktionen behandelt. Zur Unterscheidung, ob es sich um Telematik-Nachrichten des Diensteanbieters 36 oder um andere Kurzmitteilungen handelt, wird vom Router 13 der Protocoll-Identifier einer GSM Cell Broadcast Kurzmitteilung und/oder die Absenderadresse einer Point to Point Kurzmitteilung ausgewertet. Die Information darüber, welche Protocoll-Identifier und/oder DCS und/oder Absender und/oder Nutzdaten-Sequenzen eingehende Kurznachrichten der Gruppe der Telematik-Anwendung zuordnen, werden der Karte während ihrer Freischaltung der Karte für Verkehrstelematikdienste der Zentrale 36 übermittelt.

Um mißbräuchliche Nutzung der Dienste auszuschließen, können Verkehrsdaten als GSM-SMS-Meldungen etc. verschlüsselt übertragen werden. Die Entschlüsselungskomponente 14 erhält von der Freischaltungskomponente 12 die zur Entschlüsselung von empfangenen Daten oder Verschlüsselung von Anfragen an die Zentrale zu freigeschalteten Diensten erforderlichen Schlüssel.

Beim Empfang von Meldungen (= Kurznachrichten von der Zentrale) in der Karte werden diese nach erfolgreicher Entschlüsselung in kodierter Form in einem separaten File EF_{Telematik} 16 (bzw. in einem jeweils separaten Filesystem nach Diensteapplikationen getrennt) gespeichert oder in einem reservierten Bereich im RAM gehalten werden. Durch die Einrichtung eines separaten Telematikspeicher-Bereichs kann dafür Sorge getragen werden, daß verkehrstelematikbezogene Meldungen unabhängig von der Anzahl herkömmlicher, mobilfunkbezogener Kurznachrichten auf der SIM-Karte speicherbar sind. Um die Übertragungskapazität einer Kurzmitteilung zu erhöhen, werden die Nachrichten der Zentrale nicht im Klartext, sondern kodiert (z.B.: "01" = Stau; "18" = auf Autobahn 8 usw.) übertragen. Die entsprechende Dekodierung (von "18" auf "Autobahn 8" etc.) führen die Diensteapplikationen 22, 23,24 aus. Sie greifen über das Telematikfilesystem 16 auf die eingegangenen Meldungen der Zentrale zu.

Anfragen der Karte an die Zentrale(z.B.: "Ist gerade Stau auf der A8") werden von den Diensteapplikationen in Form von Point-to-Point-Kurzmitteilungen vom Mobilfunk-Telefon 33 an die Zentrale 36 gestellt. Diese sind entsprechend den auf der Luftschnittstelle definierten Protokollen zwischen der Diensteanbieter-Zentrale 36 und dem Mobilfunk-Telefon kodiert (z.B. "18" = Autobahn 8, "33" = Anfrage, ob Stau etc.). Über die Verschlüsselungskomponente 26 können diese Meldungen wahlweise verschlüsselt übertragen werden. Die hierzu erforderlichen Schlüssel werden von der Freischaltungskomponente 26 bereitgestellt und / oder sind bereits im Endgerät gespeichert. Über die "SendShortMessage" Funktion des SIM Toolkits 17 initiieren die Diensteapplikationen (21 - 24) das Senden ihrer Kurzmitteilungen. Die notwendigen Diensteadressen der Zentrale 36 werden von der Freischaltungskomponente für jede Applikation bereitgestellt.

Die Eingaben (über Mobilfunk-Telefon-Tastatur/akustisch etc.) und die optischen und/oder akustischen Ausgaben (z.B.: "Stau auf der A8") auf dem Mobilfunk-Telefon werden von den Diensteapplikationen (21 - 24 auf der Karte) gesteuert. Sie benutzen hierzu vorzugsweise die MMI-Funktionalitäten des SIM Toolkits.

Ist an die DTE / DCE Schnittstelle des Mobilfunk-Telefons ein entsprechendes Zusatzgerät (= Terminal Equipment) angeschlossen, kann es die Funktionen der Telematik SIM-Karte in gleichem Maße wie die Diensteapplikationen in Anspruch nehmen. Über die Applikation "externe Terminals" 21 werden entschlüsselte Nachrichten direkt oder zusätzlich an ein an das Mobilfunk-Telefon 33 angeschlossenes Zusatzgerät 39 (in Form eines Terminals) weitergeleitet. In diesem Fall findet dort im Rahmen der Diensteapplikation 21 - 24 die Dekodierung und Steuerung der Anzeige der Meldung statt. Sollen vom externen Terminal Anfragen an die Dienstleistungszentrale gestellt werden, erhält die Applikation 21 vom Terminal 39 entsprechende alphanumerische Meldung des Terminals 39. Diese sorgt für die ggf. notwendige Verschlüsselung und die anschließende Übertragung der Meldung. Die Funktion 20 auf der Karte 38 übernimmt die Ansteuerung des externen Terminal Equipments 39. Es erledigt hierzu die An- und Abmeldung sowie die Ein- und Ausgabe von Dienstenachrichten nach einem bestimmten Befehlssatz.

Durch die Freischaltung wird dem Kunden der Zugang zu Diensten einer Zentrale gewährt. Hierzu überträgt die Zentrale Informationen, die eine zeitlich begrenzte Nutzung der Dienste erlauben; diese Informationen beinhalten insbesondere Diensteschlüssel, den Zeitraum der Dienstebuchung sowie die Kennung der freizuschaltenden Dienste.

Die Freischaltung wird durch eine Anfrage an die Zentrale 36 initiiert. Dazu kann der Kunde eine bereits vorprogrammierte und nicht editierbare Freischaltungsanforderung (aus dem Speicher 16) in Form einer Kurznachricht an die Dienstzentrale senden. Die Identifizierung des Kunden erfolgt über seine MSISDN und/ oder über eine eindeutige Kennung der Telematik-Chip-Karte 38.
Nach dem Erhalt der Freischaltungsanfrage überprüft die Dienstzentrale die Berechtigung des Kunden. Ist diese gegeben, werden die zu dem Diensteprofil des Kunden gehörigen Freischaltungsinformationen von der Zentrale an die Chip-Karte 38 gesendet. Dies geschieht in Form einer SIM-Karten-spezifischen Kurznachricht (SM), welche auf der Karte 38 vom Router 13 an die Freischaltungskomponente 12 weitergeleitet wird. Hier werden die Adressen (CB Message Identifier bzw. Quell- und Zieladresse für Point to Point Meldungen), die Dauer der Dienstebuchung, die Diensteschlüssel und die Applikationskennungen der freigeschalteten Dienste verwaltet und gespeichert.

Beim Aktivieren der SIM-Karte (z.B. nach dem Einschalten des Mobilfunk-Telefons) übermittelt die Freischaltungskomponente 12 die gültigen Schlüssel an die Schlüsselkomponenten 14 und 26. Gleichzeitig erhält der Router 13 alle gemäß dem Diensteprofil des Kunden gültigen Diensteadressen und Applikationskennungen. Von nun an können die gebuchten Dienste uneingeschränkt genutzt werden.
Die Freischaltung verfällt hier nach Ablauf des Buchungszeitraums. Zu diesem Zeitpunkt werden die Diensteschlüssel, Diensteadressen und die Applikationskennungen von der Freischaltungskomponente gelöscht bzw. gesperrt. Für die Weitemutzung der Dienste muß eine erneute Freischaltung (der Karte 38 für Dienste der Zentrale 36) beantragt werden.

Generell erfolgt die Übermittlung von Freischaltungsdaten interaktiv (bidirektional im Anfrage-Antwort Prinzip). Trotzdem kann die Dienstzentrale 36 ihrerseits (auch ohne Anforderung seitens der Karte) jederzeit Freischaltungsinformationen an die Chip Karte 38 senden. Diese werden auch entsprechend der obengenannten Abläufe verarbeitet. Damit ist die Dienstzentrale in der Lage, Chip-Karten (z.B. bei Diebstahl) zu deaktivieren oder Freischaltungen automatisch zu verlängern.

Um Manipulationen zu unterbinden, können die Freischaltungsmeldungen (Anfrage und Antwort) auch verschlüsselt übertragen werden. Hierzu eignet sich insbesondere ein asymmetrisches Schlüsselverfahren (z.B. RSA), wobei die Nachrichten mit dem jeweils öffentlichen Schlüssel des Kommunikationspartners verschlüsselt werden. Die Ver- und Entschlüsselung auf der Karte wird durch die Komponenten 14 und 26 übernommen.

Alternativ zur Übermittlung per SMS, können Freischaltungsinformationen auch per Chip-Karten-Lesegerät in die Telematik SIM-Karte gebracht werden. Der Datenaustausch zwischen Lesegerät und Chip Karte erfolgt direkt über das Interface 9.

Der Funktionsblock 15 "Interface Freischaltung" (in Figur 4) übernimmt die Authentifizierung und Identifizierung der Freischaltungspartner. Weiterhin können in diesem Block Maßnahmen gegen Manipulationsversuche an der Karte über das Lesegerät getroffen werden.

Besonders günstig für eine Freischaltung über ein Karten-Lese-/-Schreibgerät ist es, wenn das Lesegerät die über die Luftschnittstelle übertragenen Freischaltungsmeldungen der Dienstzentrale emuliert. Damit kann die Chip-Karte 38 auf die gleichen internen Abläufe wie die bei der Freischaltung per Kurznachricht (SM) zurückgreifen. Vom Funktionsblock 15 werden die über das Interface 69 erhaltenen Freischaltungsinformationen an den Funktionsblock 12 weitergeleitet und dort verwaltet und gespeichert.

Zur Nutzung von Broadcast-Diensten werden vom Diensteanbieter (Dienstezentrale) bestimmte Cell-Broadcast-Pages zur Ausstrahlung seiner Informationen beim Netzbetreiber des Mobilfunknetzes 37 reserviert. Über Mobilfunknetze 37 (wie ein GSM-Mobilfunknetz) können von einer Zentrale mehrere voneinander unterscheidbare und unabhängige GSM-Cellbroadcast-Seiten (jeweils entsprechend Textseiten mit vorgegebener Maximal-Zeichen-Zahl) ausgesendet und mobiltefonseitig (in der Karte) unterschieden und getrennt weiterverarbeitet werden. Diese Pages (= Seiten) sind durch Cell-Broadcast-Identifier eindeutig gekennzeichnet und stehen dem Diensteanbieter exklusiv zur Verfügung. Die in den Cell Broadcast Pages ausgestrahlten Diensteinformationen sind kodiert und verschlüsselt. Sie werden periodisch gesendet und vom Diensteanbieter (= der Zentrale 36) kontinuierlich aktualisiert.

Während der Freischaltung übermittelt die Dienstzentrale 36 mit einer Kurznachricht etc. die für den Kunden freigeschalteten Message Identifier sowie die zugehörigen Schlüssel zur Entschlüsselung der Meldungen. Diese werden in der Freischaltungskomponente 12 gespeichert und dem Router 13 und der Entschlüsselungskomponente 14 bei Betriebsbereitschaft zur Verfügung gestellt.

Weiterhin erhält bei der Freischaltung die GSM-Komponente der SIM-Karte 38 eine Liste der freigeschalteten Identifier (insbesondere PID-Identifier und/oder Nutzdaten-Identifier und/oder andere). Diese werden in der Karte in das File EF_{CBMID} - (bei einem Cell Broadcast Message Identifier für Data Download) bzw. in das File EF_{CBMI} - (bei einem anderen Cell Broadcast Message Identifier) des Funktionsblocks 10 übernommen. Das Mobilfunk-Telefon liest diese Identifier jeweils bei Betriebsbeginn aus. Das Mobilfunk-Telefon wird dadurch veranlaßt, alle Cell Broadcast Nachrichten mit diesem Message Identifier zu empfangen und ohne Darstellung auf dem Mobilfunk-Telefon an die SIM-Karte weiterzureichen.

Die auf der Telematik SIM-Karte eingehenden CB-SMS (= Cellbroadcast-Kurznachrichten = Nachrichten an alle Mobilfunktelefone mindestens einer Mobilfunkzelle) werden vom Router 13 weitergeleitet. Der Router trennt die telematikbezogenen CB-SMS von standardmobilfunk-funktionsbezogenen CB-SMS. Hierzu vergleicht er den Message Identifier einer eintreffenden Nachricht mit dem Verkehrstelematik Message Identifier. Alle CB Kurznachrichten die keine Verkehrstelematikinhalte besitzen, werden an den Funktionsblock 10 weitergeleitet und dort gemäß der GSM Spezifikation behandelt (Speicherung usw.). Alle anderen Kurzmitteilungen werden an den Block 14 zur Entschlüsselung weitergeleitet.

Nach der erfolgreichen Entschlüsselung werden die kodierten Meldungen im Filesystem 16 der Karte zwischengespeichert. Über die Applikationskennungen können die Diensteapplikationen 22, 23, 24 die für sie bestimmten Nachrichten auslesen. Selbsttätig bzw. auf Anforderung durch den Nutzer können die Diensteapplikationen über die MMI Funktionen des SIM Toolkits 17 die Inhalte ihrer Meldungen optisch und/oder akustisch ausgeben. Die Dekodierung der Meldungen kann bei ausreichender Rechenleistung in Echtzeit geschehen. Fordert der Nutzer über das Telefon die Ausgabe einer Meldung an (z.B. über die Auswahl eines Menüeintrages), wird die Nachricht nicht direkt ausgelesen, sondern zunächst von der Applikation dekodiert. Anschließend wird der Inhalt der Meldung als alphanumerischer Klartext zum Mobilfunk-Telefon weitergeleitet.

Wie man den vorhergehenden Beschreibungen entnehmen kann, ist hier für den Empfang von Broadcast-Nachrichten von der Zentrale kein explizites Anfordern der Nachricht von der Dienstzentrale erforderlich. Die Dienstinformationen werden im Hintergrund fortlaufend aktualisiert und können (z. B. auf Anfrage des Mobilfunk-Telefon-Benutzers über die Mobilfunk-Telefon-Tastatur) bei Bedarf über einen Menüpunkt des Telefons ausgelesen werden.

Im Gegensatz zu Broadcast Diensten, arbeiten interaktive Dienste nach dem Anfrage - Antwort Prinzip. Die Anfrage eines Dienstes erfolgt nach der Auswahl des jeweiligen Dienstes im Telernatikmenü. Dieses Menü wird durch die Applikationen 22, 23, 24 beim Aktivieren der SIM-Karte erzeugt. Hierzu greift sie auf die Möglichkeiten des SIM Application Toolkits zurück; alternativ ist eine zentrale Menüapplikation für alle Dienste möglich.

Nach der Auswahl der Applikation (z.B. über die Mobilfunk-Telefon-Tastatur) können ggf. bestimmte Parameter, wie z.B. eine Gebietswahl für das Gebiet, zu dem Verkehrsinformation gewünscht wird, auf dem Mobilfunk-Telefon eingegeben werden. Anschließend werden die Eingabedaten vom SIM Toolkit an die jeweilige Applikation weitergeleitet. Die Applikation stellt die Anfrage der Karte (durch eine Kurznachricht, wie eine SMS) an die Zentrale zusammen und verschlüsselt diese (falls gewünscht) mit Hilfe der Verschlüsselungskomponente 26. Die Zieladressen der Anfrage holt sich die Applikation von der Freischaltungskomponente 12. Anschließend wird die Anfrage über die "SendShortMessage" Funktion des SIM Toolkits vom Mobilfunk-Telefon per Mobilfunk zur Dienstzentrale gesendet.

Die Antwort der Zentrale an die Karte in Form einer Kurznachricht (SMS) ist ein binärer Datenstrom, der von der Dienstzentrale kodiert und verschlüsselt übertragen wird. Um die Kurznachricht ohne (herkömmliche, automatische, sofortige) Darstellung und Signalisierung auf dem Display an die Chip Karte weiterzureichen, wird sie von der Zentrale mit speziellen Parametern für die PID und DCS = Message Class 2 an das Mobilfunk-Telefon 33 gesendet. Diese Antwort-Kurznachricht wird vom Router 13 auf der SIM-Karte weiter-geroutet. Er vergleicht die Absenderadresse mit den bei der Freischaltung übermittelten Adressen der Dienstzentrale. Falls die Absenderadresse eine Adresse der Dienstzentrale 36 ist, wird die Nachricht an die Entschlüsselungskomponente 14 zur Entschlüsselung weitergereicht. Anschließend wird die entschlüsselte Meldung im File EF_{Telematik} zwischengespeichert. Die Diensteapplikationen können diese Nachricht aus dem Filesystem auslesen. Sind die Absenderadressen den Diensteapplikationen 21 bis 24 eindeutig zugeordnet, findet über diese Beziehung die Zuweisung der Kurznachricht zu einer Diensteapplikation (21 bis 24) statt. Ansonsten müssen die von der Zentrale gesendeten Kurznachrichten Applikationskennungen für die Zuordnung zu den Diensten haben.

Die Dekodierung und Darstellung der Antwort-Kurznachrichten (= Anwort-Meldungen) der Zentrale obliegt den Diensteapplikationen.

Für die Darstellung von Diensten auf dem Mobilfunk-Telefon können insbesondere die auf dem Mobilfunk-Telefon vorhandenen Ein- und Ausgabemöglichkeiten genutzt werden. Für SIM-Karten und Telefone die das SIM Application Toolkit unterstützen (GSM Spezifikation "Spezification of the SIM Application Toolkit for the Subscriber Identity Module - Mobile Equipment interface - GSM 11.14) ergeben sich insbesondere als Möglichkeiten zur Benutzerführung: die Darstellung von Texten, der Aufbau von Menüs, die Eingabe von Zeichen durch die Tastatur, die Ausgabe von Tönen, das Absetzen von Kurznachrichten.

Damit können endgerätseitige Menüfunktionen für Verkehrstelematik-Dienste in die Menüführung des Mobilfunk-Telefons komfortabel eingegliedert und angepaßt werden. Zuständig für die Menüführung sind die jeweiligen Diensteapplikationen bzw. eine zentrale Menüführung.

Sollten die Funktionen des SIM Toolkits dem Mobilfunk-Telefon bzw. der Karte nicht zur Verfügung stehen, müssen die normalen Short Message - MMI Funktionen des Telefons als Ein - Ausgabemöglichkeiten verwendet werden. Für das Absetzen von Anfragen könnten von den Diensteapplikationen bereits kodierte und nicht editierbare Nachrichten im Speicher 16 zusammengestellt werden. Empfangene Nachrichten sollten von den Diensteapplikationen unmittelbar nach ihrem Eingang dekodiert und anschließend im Speicher 16 abgelegt werden. Beim Lesen von Kurznachrichten aus dem Menü des Telefons, können beide Speicherbereiche (normale Kurznachrichten im Filesystem EF_{SMS} und Verkehrstelematik-Kurznachrichten) virtuell aneinander gereiht werden. Entsprechend der Aktualität der Meldungen, kann die Reihenfolge der ausgegebenen Meldungen manipuliert werden.

Externe Zusatzgeräte 39, insbesondere Terminals, sind über die DTE / DCE Schnittstelle des Mobilfunk-Telefons anschließbar. Auf diesen Terminals können ähnliche oder gleiche Diensteapplikationen wie die auf der SIM-Karte (22, 23, 24) untergebracht werden. Im Gegensatz zu den Diensten der Chip-Karte 38, benötigen diese Applikationen nicht die MMI Funktionalitäten des Mobilfunk-Telefons. Da die MMI-Möglichkeiten des Mobilfunk-Telefons eingeschränkt sind, können gleiche Diensteapplikationen auf externen Terminals 39 wesentlich besser dargestellt werden. Dies ist insbesondere bei der Nutzung von Diensten im Fahrzeug (größeres Display, größere Tastatur, Sprachein- und ausgabe) vorteilhaft. Weiterhin können externe Zusatzgeräte 39, wie Terminals, Dienste umsetzen, die auf der SIM-Karte nicht befriedigend realisierbar sind (z.B. grafische Darstellungen für Navigationsdienste).

Die auf dem externen Terminal 39 abgewickelten Dienste besitzen hier keine eigene im externen Terminal gespeicherte Subskription, sondern nutzen die Subskription der Telematik SIM-Karte. Alle Funktionen die im Bereich Conditional Access (Zugangsberechtigung) liegen werden auf der SIM-Karte durchgeführt. Das heißt, daß sich alle Funktionen zur Freischaltung, zur Adressverwaltung, zum Schlüsselmanagement sowie zur Ver- und Entschlüsselung auf der Chip Karte befinden. Externe Terminals nutzen diese Funktionen lediglich, um hierüber binäre Datenströme zur Dienstzentrale zu senden bzw. von ihr zu empfangen. Ein Kunde, der eine Verkehrstelematik-SIM-Karte 38 besitzt kann demzufolge nicht nur sein Telefon als Verkehrstelematik-Endgerät benutzen, sondern beliebig viele schnittstellenkompatible Terminals 39 oder andere Zusatzgeräte 39 an sein Telefon anschließen.

Verantwortlich für die Kommunikation mit den externen Terminals ist der Funktionsblock 20 (in Fig. 4) auf der Karte 38. Hier werden fest definierte Kommandos, die von der Karte 38 mit den externen Terminals 39 auszutauschen sind, umgesetzt. Da die SIM-Karte 38 nicht direkt auf die DTE-Schnittstelle des Mobilfunk-Telefons zugreifen kann, erfolgt die Kommunikation über read / write Zugriffe vom Terminal 39 auf die SIM-Karte 38. Diese Zugriffe können über ein im RAM-Speicher (der Karte) angelegtes virtuelles Filesystem erfolgen.

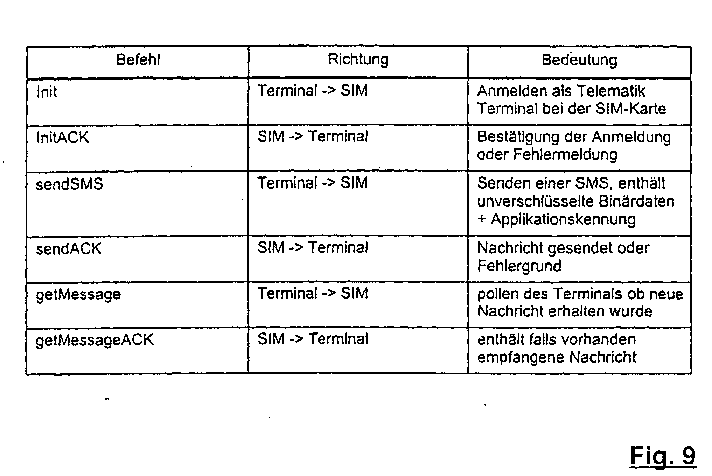

Das Handshake auf der Schnittstelle 32 zwischen dem Mobilfunk-Telefon und einem Zusatzgerät 39 wird vom Funktionsblock 20 übernommen. Alle Nachrichten von der SIM-Karte 38 zum Terminal 39 bzw. umgekehrt werden von der jeweiligen Gegenseite aktiv quittiert. Da die SIM-Karte 38 nicht in der Lage ist, das Terminal Equipment 39 selbst anzusprechen, erfolgt die Übertragung im Master / Slave-Verfahren. Es sind zweckmäßig zumindest die Befehle gemäß Figur 9 umzusetzen, also ein Befehl ("Init" etc.), mit dem sich das Zusatzgerät bei der SIM-Karte anmeldet (und evtl. identifiziert/charakterisiert), ein Befehl, mit welchem die Karte dem Zusatzgerät seine Anmeldung (mit "Init") quittiert (mit "InitACK") oder eine Fehlermeldung übergibt ("Init Error", nicht dargestellt), ein Befehl ("sendSMS"), mit welchem das Zusatzgerät die Karte zum Senden einer Kurznachricht auffordert, ein Befehl ("sendACK"), mit dem die Karte dem Zusatzgerät die Kurznachricht-Sendeaufforderung ("sendSMS") bestätigt (bzw. die nicht daragestellte Fehlermeldung), die Anfrage des Zusatzgerätes bei der Karte von der Karte empfangene Kurznachricht (oder sonst eine Lese-Meldung) dem Zusatzgerät zu übergeben, durch eine Meldung ("getMassageACK"). Die Befehle werden zwischen dem Zusatzgerät und der Karte über die Schnittstelle 32 ausgetauscht. Im Zusatzgerät und in der Karte kann ein Befehl jeweils als Bit-Sequenz übereinstimmend vorgegeben sein.

Die Applikation 21 zum "externen Terminal" auf der Karte (s. auch Fig. 2) sorgt dafür, daß in der Karte Nachrichten von der Zentrale über das Mobilfunk-Telefon an die Karte entschlüsselt werden bzw. Nachrichten von der Karte zur Zentrale verschlüsselt werden. Gleichzeitig liest sie auf Anfrage vom Terminal das Freischaltungsprofil aus der Freischaltungskomponente 12 aus und übergibt dieses dem Terminal. Dadurch erkennt das externe Terminal welche Dienste der Kunde aktuell gebucht hat.

Weiterhin können über dieses Interface 21/32 Terminals 39 oder andere Zusatzgeräte 39 angeschlossen werden, die keine eigene Intelligenz besitzen. Hierbei laufen die Diensteapplikationen auf der Telematik SIM-Karte, die Ein- und Ausgaben finden jedoch auf dem Terminal 39 statt. Der Austausch der MMI Meldungen zwischen Telematik SIM-Karte und Terminal Equipment findet nach einem definierten Protokoll statt. Zusätzlich besteht die Möglichkeit, über diese Schnittstelle Nutzinformationen für die SIM-Karten Diensteapplikationen einzubringen. Dies könnten beispielsweise Ortungsinformationen eines externen Ortungsmoduls, wie GPS etc., sein.

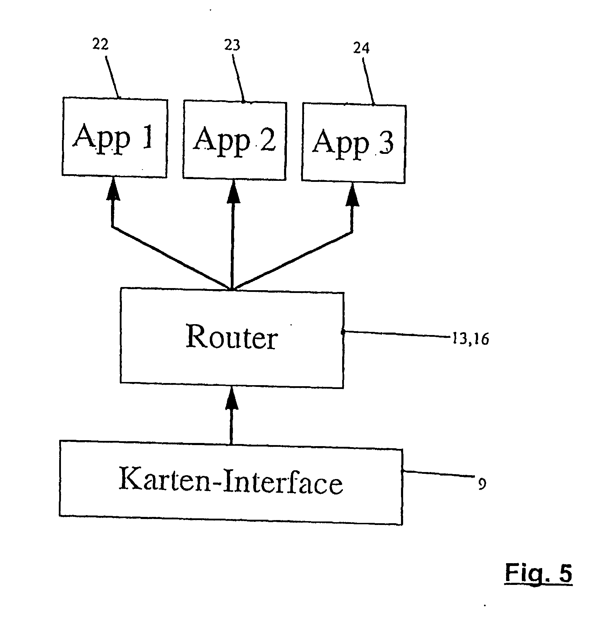

Figur 5 zeigt als grobes Blockschaltbild den Datenfluß von in der Karte eingehenden Daten vom Karteninterface 9 über den Router 13, 16 auf der Karte 38 zu verschiedenen Applikationen 1 - 3 mit den Bezugszeichen 22 bis 24.

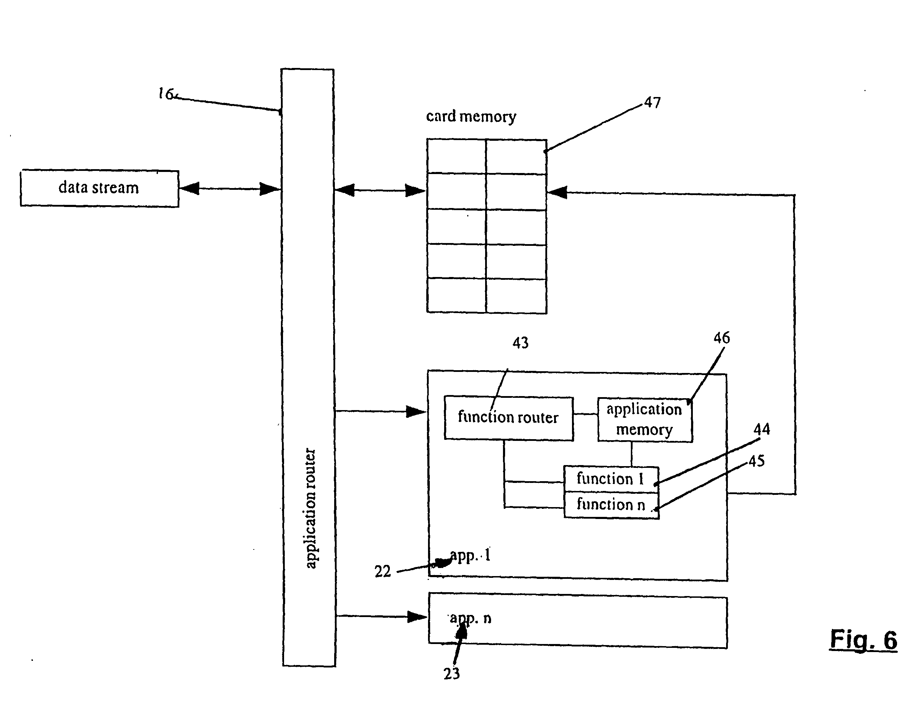

Figur 6 zeigt den Datenfluß von Nutzdaten zu verschiedenen Applikationen app.1 (Bezugszeichen 22), app.n (23). In die Karte 38 eingehende Daten werden in einer Applikation (22/23) jeweils über einen Funktions-Router (Function Router 43) den jeweils richtigen Teilfunktionen 44, 45 usw. einer Applikation 22 und/oder dem Datenspeicher 46 auf der SIM-Karte für eine Applikation 22 zugeleitet. Den Funktionen 44, 45 zugeleitete Daten können insbesondere Steuerungsdaten oder Befehle sein. Dem Speicher 46 zugeleitete Daten können insbesondere Nutzdaten für einen Verkehrstelematik-Dienst sein. Beispielsweise kann die Funktion 44 die Entschlüsselung von Verkehrsinformationen sein. Die Funktion n kann beispielsweise die Ausgabe einer Navigationshilfe zu einer Anfrage des Benutzers sein.

Zum Ablegen von Daten einer oder mehrerer Applikationen steht der unterteilte Speicherbereich 47 einer Karte 38 zur Verfügung.

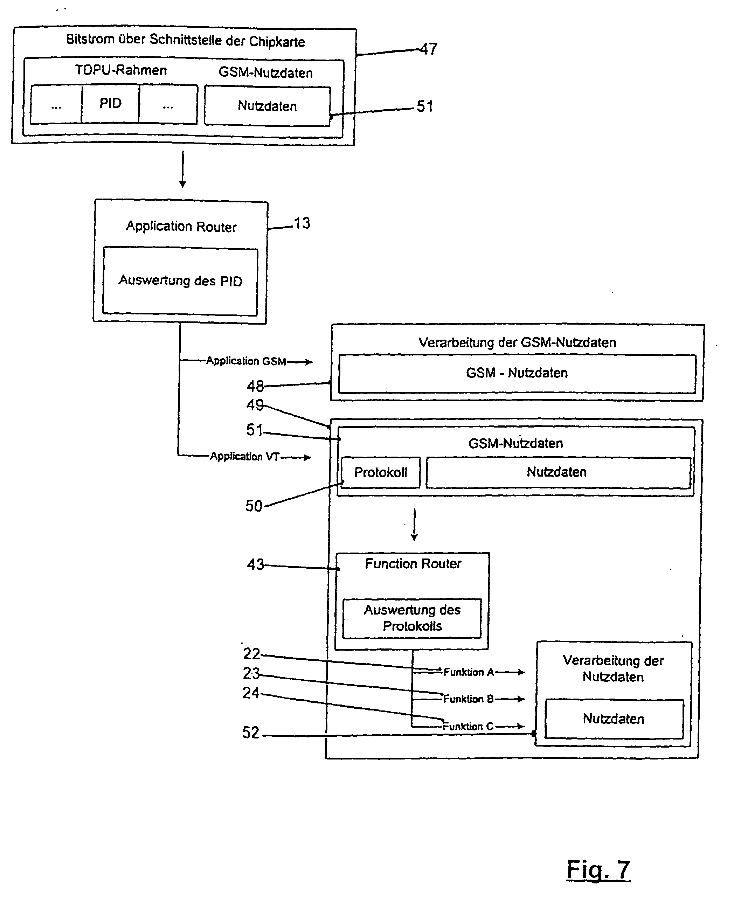

Figur 7 verdeutlicht das Routing von in die Chipkarte hereinkommenden Daten (die beispielsweise von einer Zentrale 36 per Mobilfunk 37 über ein Mobilfunk-Telefon 33 und ein internes Interface 40 an die Karte 38 gesendet sein können). Ein Bit-Strom 47 (also eine Bit-Folge) gelangt über das Interface 9 der Karte 38 in die Karte. Beispielhaft ist unter der Nummer 47 ein als Bit-Strom in die Karte gelangender Datensatz angegeben. Ein Datensatz 47 umfaßt einen Header, hier den TDPU-Rahmen, sowie Nutz-Daten. Im TDPU-Rahmen sind hier nicht besonders bedeutsame Bits mit "...." gekennzeichnet. Im TDPU-Rahmen ist insbesondere die PID-Sequenz von Bedeutung. Z.B. kann eine bestimmte PID alleine, eine PID zusammen mit bestimmten Stellen in den Nutzdaten oder nur eine bestimmte Sequenz in den Nutzdaten im Application-Router 13 zur Entscheidung verwendet werden, wohin eingehende Daten eines Bit-Stroms 47 weiterzuleiten sind.

Im dargestellten Beispiel wird lediglich die PID zum Routing im Router 13 verwendet. Bei bestimmten standardisierten PID-Sequenzen folgt eine unveränderte Weiterleitung des Bit-Stroms 47 an eine Standard-Mobilfunk-Funktion (= Application GSM), wo sie wie bei herkömmlichen Karten in herkömmlicher Weise weiterverarbeitet wird, nämlich im dargestellten Standard-Mobilfunk-Funktionen-Block 48 zur Verarbeitung und Speicherung von GSM-Nutzdaten.

Sich auf GSM-Details beziehende Daten werden im GSM-Funktionsblock 48 gespeichert bzw. weiterbehandelt (50). Bei bestimmten PID-Sequenzen (die in der Zentrale 36 und in der Karte 38 übereinstimmend festgelegt sind) erfolgt eine Weiterleitung des Bit-Stroms 47 vom Router 13 zu einer Spezial-Applikation, hier einer Verkehrstelematik-Dienst-Applikation ("Application VT", 49). Sich auf Spezialapplikationen 22, 23, 24 beziehende Daten werden vom Function-Router 43 an die Funktionen der entsprechenden Spezialapplikationen, hier Verkehrstelematik-Dienst-Funktionen A, B, C (44,45) weitergeleitet. Die Weiterleitung im Function-Router 43 erfolgt hier aufgrund von einer vorgegebenen Bit-Sequenz ("Protokoll 50") in den "GSM-Nutzdaten" 51 (die neben "Protokoll"-Daten reine Nutzdaten für die Spezialapplikation enthalten). Im dargestellten Beispiel sind die Nutzdaten-Routing-Bits 50, aufgrund welcher (im Verkehrstetematik-Block) im Function-Router ein weiteres Routing zu einer der unterschiedlichen Funktion A bis C erfolgt, am Anfang des GSM-Nutzdatenblocks 51 angeordnet; sie können jedoch auch an anderer Stelle angeordnet sein. Die Weiterverarbeitung entsprechend der unterschiedlichen Funktionen gemäß Figur 6 ist hier im Block 52 nur schematisch dargestellt.

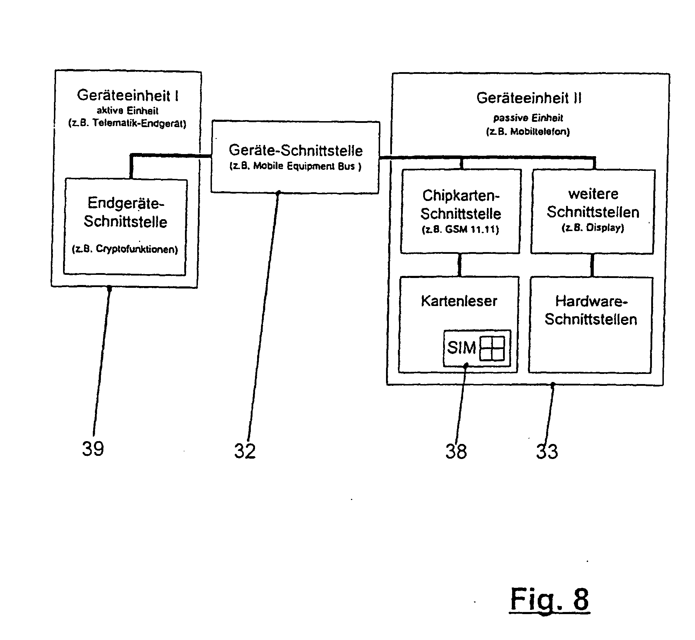

Figur 8 zeigt ein Beispiel einer Geräteverschaltung eines Mobilfunk-Telefons 33 mit einer integrierten SIM-Karte 38, über eine Geräteschnittstelle 32 zu einem Zusatzgerät 39. Wenn das Zusatzgerät 39 ein aktives Gerät (welches z.B. Daten von der Karte anfragen oder diese zum Senden einer Kurznachricht auffordem kann) ist, kann es sich hierbei um einen Aufbau gemäß Figur 1 handeln. Ferner ist es möglich, daß das Gerät 39 auch ein passives (z.B. nur darstellendes Graphik-Gerät ist oder ein Gerät, welches z.B. im Master-Slave-Betrieb mit dem Gerät 38 den Slave-Part hinsichtlich auszulagemder Funktionen übernimmt.

Ein endgerätseitig auszuführender spezialapplikationsbezogener Vorgang eines erfindungsgemäßen Verfahrens kann insbesondere auch umfassen, daß durch ein Teilprogramm auf der Karte, die örtliche Position des Mobilfunk-Telefons, in welchem sich die Karte befindet, erfaßt und per Mobilfunk an eine Zentrale übermittelt wird. Die Erfassung der Position des Mobilfunk-Telefons kann durch ein im Mobilfunk-Telefon integriertes GPS-Modul oder sonstiges Positionserfassungsmodul erfolgen. Die Positionserfassung ist ferner auch über eine Schnittstelle des Mobilfunk-Telefons zu einem anschließbaren externen GPS-System oder anderen Positionserfassungs-Systemen möglich. Die Positionserfassung kann von einem Teilprogramm der Karte aus steuerbar sein. Die Übermittlung von der Karte über das Mobilfunk-Telefon und ein Mobilfunknetz zu einer Zentrale kann per Kurznachricht erfolgen. Eine Sequenz mehrerer nacheinanderfolgender Positionen, evtl. auch mit zugehörigen Zeitpunkten, kann gemeinsam in einem Datensatz an eine Zentrale übermittelt werden.

## Patentansprüche

1. Verfahren zum endgerätseitigen Ausführen mindestens eines auf einen Verkehrstelematikdienst bezogenen Vorgangs, wobei der Vorgang vollständig oder teilweise als Programm in einer Mobilfunk-Teilnehmer-Identifizierungskarte (38) abläuft, welches Programm teilweise oder vollständig auf der Mobilfunk-Teilnehmer-Identifizierungs-Karte (38) gespeichert ist und über das Mobilfunknetz (37) eine Freischaltung des Mobilfunk-Endgerätes (33) für mindestens einen Telematik-Dienst (21 - 24) durch Übergabe mindestens eines Schlüssels zum Entschlüsseln von von der Zentrale (36) über das Mobilfunknetz (37) an das Mobilfunk-Endgerät (33) und/oder das Telematik-Zusatzgerät (39) gesendeten Verkehrsdaten (47) erfolgt.

2. Verfahren nach Anspruch 1,
**dadurch gekennzeichnet,**
**daß** der mindestens eine Vorgang das Anfordern und/oder den Empfang von Verkehrsdaten und/oder die Dekodierung von Verkehrsdaten und/oder die Darstellung und/oder die Weiterreichung an ein Telematik Zusatzgerät von von einer Zentrale über ein Mobilfunknetz, insbesondere als Kurznachricht (47), an ein Mobilfunk-Endgerät (33) mit einer Mobilfunk-Teilnehmer-Identifikationskarte (38) gesendeten Verkehrsdaten umfaßt.

3. Verfahren nach einem der vorhergehenden Ansprüche,
**dadurch gekennzeichnet,**
**daß** ein Vorgang die Übergabe von Daten und/oder Befehlen vom Mobilfunk-Endgerät (33) an ein mit dem Mobilfunk-Endgerät (38) verbundenes oder verbindbares Zusatzgerät (39), insbesondere Verkehrstelematik-Zusatzgerät (39)
umfaßt.

4. Verfahren nach einem der vorhergehenden Ansprüche,
**dadurch gekennzeichnet,**
**daß** ein Vorgang die Entgegennahme von Daten und/oder Befehlen von einem mit dem Mobilfunk-Endgerät (33) verbindbaren oder verbundenen Zusatzgerät (39), insbesondere Verkehrstelematik-Zusatzgerät durch das Mobilfunk-Endgerät umfaßt.

5. Verfahren nach einem der vorhergehenden Ansprüche
**dadurch gekennzeichnet,**
**daß** nur im Mobilfunk-Endgerät (33) eine Abarbeitung des Programms
und/oder eine Darstellung von Daten (47) für einen Mobilfunk-Endgerät-Benutzer erfolgt.

6. Verfahren nach einem der vorhergehenden Ansprüche,
**dadurch gekennzeichnet,**
**daß** im Telematik-Zusatzgerät (39) eine Abarbeitung von vom Mobilfunk-Endgerät (33) entgegengenommenen Befehlen und/oder die Darstellung von Daten für einen Benutzer erfolgt.

7. Verfahren nach einem der vorhergehenden Ansprüche,
**dadurch gekennzeichnet,**
**daß** von einer Verkehrszentrale (36) über ein Mobilfunknetz (37) an das Mobilfunk-Endgerät (33) gesendete, vom Mobilfunk-Endgerät (33) empfangene Verkehrstelematik-Daten (47) und/oder Schlüsseldaten zumindest teilweise und zumindest temporär auf der Mobilfunk-Teilnehmer-Identifikationskarte (38) gespeichert werden.

8. Verfahren nach einem der vorhergehenden Ansprüche,
**dadurch gekennzeichnet,**
**daß** vom Verkehrstelematik-Nutzer Eingaben von der Mobilfunk-Teilnehmer-Identifikationskarte (38) gesteuert nur über das Mobilfunk-Endgerät (33) abgefragt werden, in das (33) die Mobilfunk-Teilnehmer- Identifikationskarte (38) aufnehmbar ist.

9. Verfahren nach einem der vorhergehenden Ansprüche,
**dadurch gekennzeichnet,**
**daß** über ein an ein Mobilfunk-Endgerät (33) anschließbares Verkehrstelematik Zusatzgerät (39) nur eine Datenausgabe und/oder Menü-Ausgabe und /oder Eingabe erfolgt und daß die Ablaufsteuerung im Mobilfunk-Endgerät (33) und/oder in der Mobilfunk-Teilnehmer- Identifikationskarte (38) erfolgt.

10. Verfahren nach einem der vorhergehenden Ansprüche,
**dadurch gekennzeichnet,**
**daß** Schlüssel für eine Dekodierung von empfangenen Daten und/oder für die Anforderung von Daten nur auf der Mobilfunk-Teilnehmer-Identifikationskarte (38) gespeichert sind.

11. Verfahren nach einem der vorhergehenden Ansprüche
**dadurch gekennzeichnet,**
**daß** durch das Mobilfunk- Endgerät (33) von einer Verkehrstelematikzentrale (36) empfangene Verkehrstelematik-Datensequenzen (47) auf der Mobilfunk-Teilnehmer-Identifikationskarte (38) mit einem dort abgelegten Schlüssel entschlüsselt werden und daraufhin weiterverarbeitet oder/und dargestellt werden.

12. Verfahren nach einem der vorhergehenden Ansprüche,
**dadurch gekennzeichnet,**
**daß** das Programm auf der Mobilfunk-Teilnehmer-Identifikationskarte (38) ein Teilprogramm zur automatischen Erkennung von an das Mobilfunk-Endgerät (33), in welchem sich die Mobilfunk-Teilnehmer-Identifikationskarte (38) befindet, angeschlossenen Verkehrstelematik-Zusatzgeräten (39) umfaßt.

13. Verfahren nach einem der vorhergehenden Ansprüche,
**dadurch gekennzeichnet,**
**daß** das Programm auf der Mobilfunk-Teilnehmer-Identifikationskarte (38) ein Teilprogramm zur Abwicklung von verkehrstelematikbezogenen Informationen ohne Verkehrstelematik-Zusatzgeräte sowie mindestens ein Teilprogramm für die Abwicklung verkehrstelematikbezogener Teil-Vorgänge auf der Mobilfunk-Teilnehmer-Identifikationskarte bei mindestens einer Konstellation von an das Mobilfunktelefon, in welchem sich die Mobilfunk-Teilnehmer-Identifikationskarte befindet, angeschlossenem Zusatzgerät, mit dem vorhandenen Zusatzgerät umfaßt.

14. Verfahren nach einem der vorhergehenden Ansprüche,
**dadurch gekennzeichnet,**
**daß** das Programm auf der Mobilfunk-Teilnehmer-Identifikationskarte (38) ein Teilprogramm für die Erkennung eines Positionsbestimmungssystems, insbesondere GPS-Systems, umfaßt, welches an das Mobilfunk-Endgerät (33) angeschlossen ist, in welchem sich die Mobilfunk-Teilnehmer-Identfikationskarte befindet
und/oder daß das Programm ein Teilprogramm umfaßt, welches zumindest vom Positionserfassungs-Zusatzgerät an die Mobilfunk-Teilnehmer-Identifikationskarte übermittelte Daten erfaßt und verwendet.

15. Verfahren nach Anspruch 14,
**dadurch gekennzeichnet,**
**daß** die Mobilfunk-Teilnehmer-Identifikationskarte (38) vom Positions - Erfassungs-Zusatzgerät (39) abgegebene, insbesondere Position und/oder Richtung und/oder Zeit umfassende Daten an eine Verkehrstelematikzentrale übermittelt (37) und/oder zur Interpretation und/oder Darstellung von einer Verkehrszentrale empfangener Verkehrstelematikdaten verwendet.

16. Verfahren nach einem der vorhergehenden Ansprüche,
**dadurch gekennzeichnet,**
**daß** das Programm auf der Mobilfunk-Teilnehmer-Identifikationskarte (38), insbesondere Position und/oder Richtung und/oder Zeit umfassende Daten von einem Positionserfassungssystem, insbesondere GPS-System, erfaßt, das in einem Mobilfunk-Endgerät integriert ist, in das die Mobilfunk-Teilnehmer-Identifikationskarte aufnehmbar ist.

17. Verfahren nach einem der vorhergehenden Ansprüche,
**dadurch gekennzeichnet,**
**daß** von einer Verkehrszentrale über ein Mobilfunknetz an das Mobilfunk-Endgerät (33), in dem sich die Mobilfunk-Teilnehmer-Identifikationskarte (38) befindet, gesendete Verkehrsdaten in der Mobilfunk-Teilnehmer-Identifikationskarte
verarbeitet und/oder zur Darstellung über das Mobilfunk-Endgerät oder/und ein daran angeschlossenes Verkehrstelematikzusatzgerät verwendet werden.

18. Verfahren nach einem der vorhergehenden Ansprüche,
**dadurch gekennzeichnet,**
**daß** die Kommunikation zwischen der Mobilfunk-Teilnehmer-Identifikationskarte (38) und /oder dem Mobilfunk-Endgerät (33) in welchem sie (38) sich befindet sowie einer Verkehrstelematikzentrale bidirektional erfolgt.

19. Verfahren nach einem der vorhergehenden Ansprüche,
**dadurch gekennzeichnet,**
**daß** die Kommunikation zwischen der Mobilfunk-Teilnehmer-Identifikationskarte (38) und dem Mobilfunk-Endgerät (33) in welchem sie sich befindet einerseits sowie einer Verkehrstelematikzentrale andererseits, unidirektional von der Dienstzentrale (36) an das Mobilfunk-Endgerät (33) durch Übermittlung von Verkehrsdaten (47) erfolgt.

20. Verfahren nach einem der vorhergehenden Ansprüche,
**dadurch gekennzeichnet,**
**daß** die Übermittlung (37) von Daten (47) von einer Zentrale (36) an ein Mobilfunk-Endgerät (33), in welchem sich die Mobilfunk-Teilnehmer-Identifikationskarte (38) befindet, als Kurznachricht, insbesondere GSM-SMS erfolgt.

21. Verfahren nach einem der vorhergehenden Ansprüche,
**dadurch gekennzeichnet,**
**daß** in der Mobilfunk-Teilnehmer-Identifikationskarte (38) Karte geprüft wird, ob die PID in einer vom Mobilfunk-Endgerät (33) von einer Zentrale (36) empfangenen Daten-Sequenz einer gespeicherten Identifizierungssequenz in der Mobilfunk-Teilnehmer-Identifikationskarte entspricht und in diesem Falle eine Weiterverarbeitung der empfangenen Verkehrsdaten-Sequenz durch ein Verkehrstelematik-Teilprogramm, insbesondere auf der Mobilfunk-Teilnehmer-Identifikationskarte, erfolgt.

22. Verfahren nach einem der vorhergehenden Ansprüche,
**dadurch gekennzeichnet,**
**daß** in der Mobilfunk-Teilnehmer-Identifikationskarte (38) geprüft wird, ob in einer vom Mobilfunktelefon von einer Verkehrszentrale empfangenen Verkehrsdaten-Sequenz der Parameter DCS den Wert "Message Class 2" hat und nur in diesem Fall eine Weiterverarbeitung der empfangenen Verkehrsdaten-Sequenz durch ein Verkehrstelernatik-Teilprogramm, insbesondere auf der Mobilfunk-Teilnehmer-Identifikationskarte (38), erfolgt.

23. Verfahren nach einem der vorhergehenden Ansprüche,
**dadurch gekennzeichnet,**
**daß** in der Mobilfunk-Teilnehmer-Identifikationskarte (38) überprüft wird, ob eine Sequenz in den Nutzdaten einer im Mobilfunk-Endgerät (33) von einer Dienstzentrale (36) empfangenen Daten-Sequenz (47) einem gespeicherten Schlüssel in der Mobilfunk-Teilnehmer-Identifikationskarte entspricht.

24. Verfahren nach einem der vorhergehenden Ansprüche,
**dadurch gekennzeichnet,**
**daß** Verkehrstelematik-Nutzdaten im GSM File-System auf der Karte von Nutzdaten anderer GSM-Anwendungen getrennt gespeichert werden.

25. Verfahren nach einem der vorhergehenden Ansprüche
**dadurch gekennzeichnet,**
**daß** bei der Initialisierung der Karte geprüft wird, welche Betriebsmodi die Karte und/oder das Mobilfunktelefon, in dem sich die Karte befindet, unterstützen und daß nur für unterstützte Betriebsmodi geeignete Teilprogramme auf der Karte aufrufbar gemacht werden.

26. Verfahren nach einem der vorhergehenden Ansprüche,
**dadurch gekennzeichnet,**
**daß** vom Mobilfunk- Endgerät (33) von einer Dienstzentrale (36) per Mobilfunk (37) empfangene, als verkehrstelematikbezogene Daten erkannte, Verkehrsdaten Sequenzen an verkehrstelematikbezogene Applikationen-Teilprogramme auf der Mobilfunk-Teilnehmer-Identifikationkarte (38) weitergeleitet werden, während sonstige Datensequenzen an den zuständigen Empfänger auf der Mobilfunk-Teilnehmer-Identifikationskarte und/oder im Mobilfunk-Endgerät weitergeleitet werden.

27. Verfahren nach einem der vorhergehenden Ansprüche,
**dadurch gekennzeichnet,**
**daß** Nutz-Daten und/oder Befehle von der Mobilfunk-Teilnehmer-Identifikationskarte (38) an ein Zusatzgerät (39) über die
DTE/DCE-Mobilfunk-Telefonschnittstelle (32) des Mobilfunk-Endgerätes (33), in dem sich die Mobilfunk-Teilnehmer-Identifikationskarte (38) befindet, gesendet werden.

28. Verfahren nach einem der vorhergehenden Ansprüche,
**dadurch gekennzeichnet,**
**daß** im Mobilfunk-Endgerät (33) eine von einer Verkehrstelematikzentrale als Kurznachricht empfangene Datensequenz (47) hinsichtlich ihrer Verkehrstelematik-Reievanz aufgrund der Kurznachrichten-Seite, in welcher sie sich befindet, selektiert wird und nur derart selektierte Datensequenzen an Verkehrstelematik-Funktionen auf der Mobilfunk-Teilnehmer-Identifikationskarte (38) weitergeleitet werden.

29. Verfahren nach einem der vorhergehenden Ansprüche,
**dadurch gekennzeichnet,**
**daß** neben allgemeinen GSM-bezogenen und verkehrstelematikbezogenen Teilprogrammen auf der Mobilfunk-Teilnehmer-Identifikationskarte (38) auch auf andere Anwendungen, insbesondere Geldkarten oder/und Telefonkarten-Funktionen, bezogene Teilprogramme gespeichert sind.

30. Verfahren nach einem der vorhergehenden Ansprüche,
**dadurch gekennzeichnet,**
**daß** auf verschiedene verkehrstelematikbezogene Anwendungen bezogene Teilprogramme auf der Mobilfunk-Teilnehmer-Identifikationskarte (38) vorgesehen sind, insbesondere Verkehrstelematik-bezogene Anwendungen unterschiedlicher Verkehrstelematik-Zentralen.

31. Verfahren nach einem der vorhergehenden Ansprüche,
**dadurch gekennzeichnet,**
**daß** empfangene und/oder entschlüsseite und/oder zu bearbeitende und/oder bearbeitete und/oder anzuzeigende und/oder an das Mobilfunk-Endgerät (33) zu übergebende und/oder an ein Verkehrsteleamtikzusatzgerät (39) am Mobilfunk Endgerät (33) zu übergebende Daten nur im RAM der Mobilfunk-Teilnehmer-Identifikationskarte (38) gespeichert werden.

32. Verfahren nach einem der vorhergehenden Ansprüche,
**dadurch gekennzeichnet,**
**daß** empfangene und/oder entschlüsselte und/oder zu bearbeitende und/oder bearbeitete und/oder anzuzeigende und/oder an das Mobilfunk-Endgerät (33) zu übergebende und/oder an ein Verkehrsteleamtikzusatzgerät (39) am Mobilfunk Endgerät (33) zu übergebende Daten im RAM und im EEPROM der Mobilfunk-Teilnehmer-Identifikationkarte (38) gespeichert werden.

33. Verfahren nach einem der vorhergehenden Ansprüche,
**dadurch gekennzeichnet,**
**daß** auf der Mobilfunk-Teilnehmer-Identifikationskarte (38) separate Speicherbereiche verwendet werden für auf der Mobilfunk-Teilnehmer-Identifikationskarte realisierte Teilprogramme für unterschiedliche Anwendungen eines Verkehrstelematikanbieters und/oder mehrerer Verkehrstelematikanbieter und /oder Geldkartenanbieter und /oder anderer Anbieter von sonstigen über das Mobilfunk-Endgerät (33) empfangbaren und/oder anfragbaren Datensequenzen (47).

34. Verfahren nach einem der vorhergehenden Ansprüche,
**dadurch gekennzeichnet, daß**
auf der Mobilfunk-Teilnehmer-Identifikationskarte (38) ein separater Speicherbereich für von außen durch einen Schreibzugriff und Lesezugriff zugängliche Daten für nicht-geheime Informationen ein separater Speicherbereich für von durch in die Mobilfunk-Teilnehmer-Identifikationskarte einkommende Nachrichten ohne Zugangsberechtigung nur lesbare Daten, insbesondere Freischaltungsdaten
ein von außen durch in die Mobilfunk-Teilnehmer-Identifikationskarte eingehende Nachrichten nur mit einer Eingangsberechtigung und/oder einem Schlüssel lesbarer und beschreibbarer separater Speicherbereich vorgesehen ist.

35. Verfahren nach einem der vorhergehenden Ansprüche,
**dadurch gekennzeichnet,**
**daß** der Aufruf nicht-standardisierte Chipkarten- Funktionen über standardisierte Speicher und/oder Lesekommandos der Mobilfunk-Teilnehmer-Identifikationskarte (38) erfolgt.

36. Verfahren nach einem der vorhergehenden Ansprüche,
**dadurch gekennzeichnet,**
**daß** der Aufruf nicht-mobilfunk-standardisierter Karten-Funktionen über standardisierte Mobilfunk-Hardware- und/oder Softwareschnittstellen erfolgt.

37. Verfahren nach einem der vorhergehenden Ansprüche,
**dadurch gekennzeichnet,**
**daß** das Verfahren Mobilfunk-Endgeräte (33) nach den Standards der Phase 1, 2, 2+ und komptible Mobilfunk-Endgeräte unterstützt.

38. Verfahren nach einem der vorhergehenden Ansprüche,
**dadurch gekennzeichnet,**
**daß** das Programm auf einer GSM-SIMKarte gespeichert ist.

39. Verfahren nach einem der vorhergehenden Ansprüche,
**dadurch gekennzeichnet,**
**daß** die Mobilfunk- Teilnehmer-Identifizierungskarte (38) einen Prozessor zum Abarbeiten des zur Abarbeitung durch diesen Prozessor ausgelegten Programms aufweist.

40. Verfahren nach einem der vorhergehenden Ansprüche,
**dadurch gekennzeichnet,**
**daß** die Mobilfunk- Teilnehmer-Identifizierungskarte (38) einen Router (13) zum Weiterleiten von in die Mobilfunk-Teilnehmer-Identifikationskarte eingehenden Daten, insbesondere von Kurznachrichten (47) aufweist, welcher so ausgebildet ist, daß er standardmobilfunk-funktionenbezogene Daten an Standard-Mobilfunk-Funktionen und spezialapplikationsbezogene Daten (47) an die jeweils betroffene Spezialapplikation (21 - 24) weiterleitet.

41. Verfahren nach Anspruch 40,
**dadurch gekennzeichnet,**
**daß** der Router zum Weiterleiten ein Teilprogramm auf der Mobilfunk-Teilnehmer-Identifikationskarte ist.

42. Verfahren nach einem der vorhergehenden Ansprüche,
**dadurch gekennzeichnet,**
**daß** auf der Mobilfunk- Teilnehmer-Identifizierungskarte (38) alle Funktionen integriert, insbesondere als Programm integriert sind, die erforderlich sind, um eine Spezialapplikation, insbesondere eine Verkehrstelematik-Applikation, alleine auf der Mobilfunk-Teilnehmer-Identifikationskarte in Verbindung mit einem Mobilfunk-Endgerät (33), in dem sie sich befindet, ablaufen zu lassen.

43. Verfahren nach einem der vorhergehenden Ansprüche,
**dadurch gekennzeichnet,**
**daß** die Mobilfunk-Teilnehmer-Identifizierungskarte (38) Funktionen aufweist, die eine Verwendung von VerkehrstelematikZusatzgeräten (39), die an ein Mobilfunk-Endgerät (33), in dem sie sich befindet, anschließbar sind, ermöglicht zur Eingabe abzufragender Daten und/oder Ausgabe eingehender Daten (47) und/oder Ortung.

## Claims

1. Method for executing, at a terminal, at least one process relating to a traffic telematics service, whereby the process is executed, wholly or in part, in the form of a program in a mobile subscriber identification card (38), which program is stored wholly or in part on the mobile subscriber identification card (38), and authorisation of the mobile phone terminal (33) for at least one telematics service (21 - 24) is effected via the mobile phone network (37) by sending at least one cipher key for decrypting traffic data (47) sent from the central control unit (36) via the mobile phone network (37) to the mobile phone terminal (33) and/or the telematics attachment (39).

2. Method as in Claim 1,
**characterised in that**
the at least one process includes the requesting and/or receiving of traffic data and/or the decoding of traffic data and/or the display and/or handing off, to a telematics attachment, of traffic data which are sent from a central unit via a mobile phone network, in particular in SMS (47) form, to a mobile phone terminal (33) with a mobile subscriber identification card (38).

3. Method as in one of the preceding Claims,
**characterised in that**
a process includes the relaying of data and/or commands from the mobile phone terminal (33) to an attachment (39) - in particular a traffic telematics attachment (39) - which is connected or connectable to the mobile phone terminal (38)

4. Method as in one of the preceding Claims,
**characterised in that**
a process includes the acceptance, by the mobile phone terminal, of data and/or commands from an attachment (39) - in particular a traffic telematics attachment - which is connectable or connected to the mobile terminal device (33).

5. Method as in one of the preceding Claims,
**characterised in that**
the processing of the program and/or the displaying of data (47) for a mobile phone terminal user is effected in the mobile phone terminal (33) only.

6. Method as in one of the preceding Claims,
**characterised in that**,
within the telematics attachment (39), the processing of commands accepted from the mobile phone terminal (33) and/or the display of data for a user is effected.

7. Method as in one of the preceding Claims,
**characterised in that**
traffic telematics data (47) and/or code data sent from a central traffic unit (36) via a mobile phone network (37) to the mobile phone terminal (33) and received by the mobile phone terminal (33) are stored, at least in part and at least temporarily, on the mobile subscriber identification card (38).

8. Method as in one of the preceding Claims,
**characterised in that**
inputs by the traffic telematics user can only be requested - controlled by the mobile subscriber identification card (38) - via the mobile phone terminal (33) in which the mobile subscriber identification card (38) can be held.

9. Method as in one of the preceding Claims,
**characterised in that**,
via a traffic telematics attachment (39) which can be connected to a mobile phone terminal (33), only one data output and/or menu output and/or input is effected, and that control of the execution is effected in the mobile phone terminal (33) and/or in the mobile subscriber identification card (38).

10. Method as in one of the preceding Claims,
**characterised in that**
cipher keys for the decryption of data received and/or for requesting data are stored only on the mobile subscriber identification card (38).

11. Method as in one of the preceding Claims,
**characterised in that**
traffic telematics data sequences (47) received by the mobile phone terminal (33) from a traffic telematics central unit (36) are decrypted on the mobile subscriber identification card (38) using a cipher key which is stored there, and are then further processed or/and displayed.

12. Method as in one of the preceding Claims,
**characterised in that**
the program on the mobile subscriber identification card (38) includes a subroutine for the automatic recognition of traffic telematics attachments (39) which are connected to the mobile phone terminal (33) in which the mobile subscriber identification card (38) is located.

13. Method as in one of the preceding Claims,
**characterised in that**
the program on the mobile subscriber identification card (38) includes a subroutine for handling traffic telematics-related information without traffic telematics attachments, together with at least one subroutine for handling, with the existing attachment, traffic telematics-related sub-operations on the mobile subscriber identification card in at least one constellation of attachment connected to the mobile phone in which the mobile subscriber identification card is located.

14. Method as in one of the preceding Claims,
**characterised in that**
the program on the mobile subscriber identification card (38) includes a subroutine for recognising a position-location system, in particular a GPS system, which is connected to the mobile phone terminal (33) in which the mobile subscriber identification card is located
and/or **in that** the program includes a subroutine which detects and uses data transmitted at least from the position-locating attachment to the mobile subscriber identification card.

15. Method as in Claim 14,
**characterised in that**
the mobile subscriber identification card (38) sends (37) data issued by the position-detection attachment (39), in particular data comprising position and/or direction
and/or time, to a traffic telematics central unit, and/or uses them for the interpretation and/or display of traffic telematics data received from a central traffic unit.

16. Method as in one of the preceding Claims,
**characterised in that**
the program on the mobile subscriber identification card (38) detects data - in particular comprising position and/or direction and/or time - from a position-detection system, in particular a GPS system, which is integrated in a mobile phone terminal in which the mobile subscriber identification card can be held.

17. Method as in one of the preceding Claims,
**characterised in that**
traffic data sent from a central traffic unit via a mobile phone network to the mobile phone terminal (33) in which the mobile subscriber identification card is located are processed in the mobile subscriber identification card and/or used for display via the mobile phone terminal or/and a traffic telematics attachment connected to it.

18. Method as in one of the preceding Claims,
**characterised in that**
communication between the mobile subscriber identification card (38) and/or the mobile phone terminal (33) in which it (38) is located, and a traffic telematics central unit, is effected bidirectionally.

19. Method as in one of the preceding Claims,
**characterised in that**
communication between - on the one hand - the mobile subscriber identification card (38) and the mobile phone terminal (33) in which it is located, and - on the other hand - a traffic telematics central unit is effected unidirectionally from the central service unit (36) to the mobile phone terminal (33) by the transmission of traffic data (47).

20. Method as in one of the preceding Claims,
**characterised in that**
the transfer (37) of data (47) from a central unit (36) to a mobile phone terminal (33) in which the mobile subscriber identification card (38) is located is effected in the form of a text message, in particular GSM-SMS.

21. Method as in one of the preceding Claims,
**characterised in that**
a check is carried out in the mobile subscriber identification card (38) to ascertain whether the PID in a data sequence received by the mobile phone terminal (33) from a central unit (36) is the same as a stored identification sequence in the mobile subscriber identification card; if this is the case, further processing of the traffic data sequence received is effected by a traffic telematics subroutine, in particular on the mobile subscriber identification card.

22. Method as in one of the preceding Claims,
**characterised in that**
a check is carried out in the mobile subscriber identification card (38) to ascertain whether the DCS parameter in a traffic data sequence received by the mobile phone from a central traffic unit has the value "Message Class 2"; only if this is the case is further processing of the received traffic data sequence carried out by means of a traffic telematics subroutine, in particular on the mobile subscriber identification card (38).

23. Method as in one of the preceding Claims,
**characterised in that**
a check is carried out in the mobile subscriber identification card (38) to ascertain whether a sequence in the payload data of a data sequence (47) received in the mobile phone terminal (33) from a central service unit (36) is the same as a stored cipher key in the mobile subscriber identification card.

24. Method as in one of the preceding Claims,
**characterised in that**
traffic telematics payload data are stored in the GSM file system on the card separately from the payload data of other GSM applications.

25. Method as in one of the preceding Claims,
**characterised in that**
when the card is initialised, a check is carried out to ascertain which operating modes are supported by the card and/or by the mobile phone in which the card is located, and that only subroutines which are appropriate for supported operating modes are rendered callable on the card.

26. Method as in one of the preceding Claims,
**characterised in that**
traffic data sequences which are received by the mobile phone terminal (33) from a central service unit (36) by mobile telephony (37), and which are recognised as being traffic telematics-related data, are forwarded to traffic telematics-related application subroutines on the mobile subscriber identification card (38), while other data sequences are forwarded to the appropriate receiver on the mobile subscriber identification card and/or in the mobile phone terminal.

27. Method as in one of the preceding Claims,
**characterised in that**
payload data and/or commands are sent from the mobile subscriber identification card (38) to an attachment (39) via the DTE/DCE mobile telephony interface (32) of the mobile phone terminal (33) in which the mobile subscriber identification card (38) is located.

28. Method as in one of the preceding Claims,
**characterised in that**,
in the mobile phone terminal (33), a data sequence (47), received from a traffic telematics central unit in the form of a text message, is selected with regard to its relevance to traffic telematics on the basis of the text message page in which it is located, and only data sequences thus selected are forwarded to traffic telematics functions on the mobile subscriber identification card (38).

29. Method as in one of the preceding Claims,
**characterised in that**,
in addition to general GSM-related and traffic telematics-related subroutines, subroutines relating to other applications - particularly cash card or/and telephone card functions - are also stored on the mobile subscriber identification card (38).

30. Method as in one of the preceding Claims,
**characterised in that**
subroutines relating to a number of traffic telematics-related applications are provided on the mobile subscriber identification card (38), in particular traffic telematics-related applications from different central traffic telematics units.

31. Method as in one of the preceding Claims,
**characterised in that**
data which have been received and/or decrypted and/or which are to be processed and/or have been processed and/or are to be displayed and/or to be relayed to the mobile phone terminal (33) and/or relayed to a traffic telematics attachment (39) on the mobile phone terminal (33) are stored only in the RAM of the mobile subscriber identification card (38).

32. Method as in one of the preceding Claims,
**characterised in that**
data which have been received and/or decrypted and/or which are to be processed and/or have been processed and/or are to be displayed and/or to be relayed to the mobile phone terminal (33) and/or relayed to a traffic telematics attachment (39) on the mobile phone terminal (33) are stored in the RAM and in the EEPROM of the mobile subscriber identification card (38).

33. Method as in one of the preceding Claims,
**characterised in that**,
on the mobile subscriber identification card (38), separate memory areas are used for subroutines implemented on the mobile subscriber identification card for different applications of a traffic telematics provider and/or of several traffic telematics providers and/or of cash card providers and/or of other providers of other data sequences (47) which can be received and/or requested via the mobile phone terminal (33).

34. Method as in one of the preceding Claims,
**characterised in that**,
on the mobile subscriber identification card (38), there is a separate memory area for data, accessible from outside by write access and read access, for non-confidential information; a separate memory area for data - particularly authorisation data - which are read-only from outside without access permission by messages entering the mobile subscriber identification card; a separate memory area which is readable and writeable from outside only with input permission and/or with a cipher key by messages entering the mobile subscriber identification card.

35. Method as in one of the preceding Claims,
**characterised in that**
the requesting of non-standardised chip card functions is effected via standardised memory and/or read instructions of the mobile subscriber identification card (38).

36. Method as in one of the preceding Claims,
**characterised in that**
the requesting of card functions which are non-standardised for mobile telephony is effected by standardised mobile phone hardware and/or software interfaces.

37. Method as in one of the preceding Claims,
**characterised in that**
the method supports mobile phone terminals (33) in accordance with the standards of Phases 1, 2, 2+ and compatible mobile phone terminals.

38. Method as in one of the preceding Claims,
**characterised in that**
the program is stored on a GSM SIM card.

39. Method as in one of the preceding Claims,
**characterised in that**
the mobile subscriber identification card (38) has a processor for processing the program which is designed for processing by this processor.

40. Method as in one of the preceding Claims,
**characterised in that**
the mobile subscriber identification card (38) has a router (13) for forwarding data entering the mobile subscriber identification card, particularly from text messages (47), the router being designed in such a way that it forwards data relating to standard mobile telephony functions to standard mobile telephony functions, and data (47) relating to special applications to the appropriate special application (21 - 24) in each case.

41. Method as in Claim 40,
**characterised in that**
the router for forwarding is a subroutine on the mobile subscriber identification card.

42. Method as in one of the preceding Claims,
**characterised in that**,
on the mobile subscriber identification card (38), all functions are integrated, in particular are integrated in the form of a program, which are necessary for the execution of a special application, particularly a traffic telematics application, on the mobile subscriber identification card alone in conjunction with a mobile phone terminal (33) in which it is located.

43. Method as in one of the preceding Claims,
**characterised in that**
the mobile subscriber identification card (38) has functions which make possible the use of traffic telematics attachments (39) that can be connected to a mobile phone terminal (33) in which it is located, in order to enter data which are to be requested and/or to output incoming data (47) and/or location.

## Revendications

1. Procédé pour réaliser côté terminal au moins un processus rapporté à un service de télématique de circulation, le processus se déroulant intégralement ou en partie en tant que programme dans une carte d'identification d'abonné de radiotéléphone mobile (38), ledit programme étant mis en mémoire en partie ou intégralement sur la carte d'identification d'abonné de radiotéléphone mobile (38) et une connexion du terminal de radiotéléphone mobile (33) s'effectuant par l'intermédiaire du réseau de radiotéléphone mobile (37) pour au moins un service de télématique (21 à 24) par transmission d'au moins un code pour décoder des données de circulation (47) envoyées de la centrale (36), par l'intermédiaire du réseau de radiotéléphone mobile (37), au terminal de radiotéléphone mobile (33) et/ou à l'appareil supplémentaire de télématique (39).

2. Procédé selon la revendication 1,
**caractérisé en ce que** le processus au moins unique comprend la demande et/ou la réception de données de circulation et/ou le décodage de données de circulation et/ou l'affichage et/ou la transmission à un appareil supplémentaire de télématique de données de circulation envoyées d'une centrale, par l'intermédiaire d'un réseau de radiotéléphone mobile, en particulier sous la forme de message court (47), à un terminal de radiotéléphone mobile (33) avec une carte d'identification d'abonné de radiotéléphone mobile (38).

3. Procédé selon l'une quelconque des revendications précédentes,
**caractérisé en ce qu'**un processus comprend la transmission de données et/ou d'ordres du terminal de radiotéléphone mobile (33) à un appareil supplémentaire (39), en particulier un appareil supplémentaire de télématique de circulation (39), relié ou pouvant être relié au terminal de radiotéléphone mobile (38).

4. Procédé selon l'une quelconque des revendications précédentes,
**caractérisé en ce qu'**un processus comprend la réception, par le terminal de radiotéléphone mobile, de données et/ou d'ordres venant d'un appareil supplémentaire (39), en particulier un appareil supplémentaire de télématique de circulation, relié ou pouvant être relié au terminal de radiotéléphone mobile (33).

5. Procédé selon l'une quelconque des revendications précédentes,
**caractérisé en ce qu'**une exécution du programme et/ou un affichage de données (47) pour un utilisateur de terminal de radiotéléphone mobile a lieu seulement dans le terminal de radiotéléphone mobile (33).

6. Procédé selon l'une quelconque des revendications précédentes,
**caractérisé en ce qu'**une exécution d'ordres reçus par le terminal de radiotéléphone mobile (33) et/ou l'affichage de données pour un utilisateur a lieu dans l'appareil supplémentaire de télématique (39).

7. Procédé selon l'une quelconque des revendications précédentes,
**caractérisé en ce que** des données de télématique de circulation (47) envoyées par une centrale de circulation (36) au terminal de radiotéléphone mobile (33) par l'intermédiaire d'un réseau de radiotéléphone mobile (37), reçues par le terminal de radiotéléphone mobile (33) et/ou des données codées sont mises en mémoire au moins partiellement et au moins temporairement sur la carte d'identification d'abonné de radiotéléphone mobile (38).

8. Procédé selon l'une quelconque des revendications précédentes,
**caractérisé en ce que** l'utilisateur de télématique de circulation ne peut interroger des données entrées, de manière commandée par la carte d'identification d'abonné de radiotéléphone mobile (38), que par l'intermédiaire du terminal de radiotéléphone mobile (33) dans lequel la carte d'identification d'abonné de radiotéléphone mobile (38) peut être logée.

9. Procédé selon l'une quelconque des revendications précédentes,
**caractérisé en ce que** seule une sortie de données et/ou de menu et/ou entrée de données est effectuée par l'intermédiaire d'un appareil supplémentaire de télématique de circulation (39) pouvant être raccordé à un terminal de radiotéléphone mobile (33) et que la commande séquentielle a lieu dans le terminal de radiotéléphone mobile (33) et/ou dans la carte d'identification d'abonné de radiotéléphone mobile (38).

10. Procédé selon l'une quelconque des revendications précédentes,
**caractérisé en ce que** des codes pour un décodage de données reçues et/ou pour la demande de données ne sont enregistrés que sur la carte d'identification d'abonné de radiotéléphone mobile (38).

11. Procédé selon l'une quelconque des revendications précédentes,
**caractérisé en ce que** des séquences de données de télématique de circulation (47), reçues d'une centrale de télématique de circulation (36) par le terminal de radiotéléphone mobile (33), sont décodées sur la carte d'identification d'abonné de radiotéléphone mobile (38) avec un code qui y est enregistré et sont ensuite traitées ou/et affichées.

12. Procédé selon l'une quelconque des revendications précédentes,
**caractérisé en ce que** le programme sur la carte d'identification d'abonné de radiotéléphone mobile (38) comprend un sous-programme pour la reconnaissance automatique d'appareils supplémentaires de télématique de circulation (39) raccordés au terminal de radiotéléphone mobile (33) dans lequel se trouve la carte d'identification d'abonné de radiotéléphone mobile (38).

13. Procédé selon l'une quelconque des revendications précédentes,
**caractérisé en ce que** le programme sur la carte d'identification d'abonné de radiotéléphone mobile (38) comprend, avec l'appareil supplémentaire existant, un sous-programme pour traiter des informations relatives à la télématique de circulation sans appareils supplémentaires de télématique de circulation ainsi qu'au moins un sous-programme pour traiter des sous-processus relatifs à la télématique de circulation sur la carte d'identification d'abonné de radiotéléphone mobile, dans le cas d'au moins une constellation d'appareils supplémentaires raccordés au radiotéléphone mobile dans lequel se trouve la carte d'identification de radiotéléphone mobile.

14. Procédé selon l'une quelconque des revendications précédentes,
**caractérisé en ce que** le programme sur la carte d'identification d'abonné de radiotéléphone mobile (38) comprend un sous-programme pour la reconnaissance d'un système de détermination de position, en particulier d'un système GPS, qui est raccordé au terminal de radiotéléphone mobile (33) dans lequel se trouve la carte d'identification d'abonné de radiotéléphone mobile, et/ou **en ce que** le programme comprend un sous-programme qui saisit et utilise des données transmises au moins par l'appareil supplémentaire de détermination de position à la carte d'identification d'abonné de radiotéléphone mobile.

15. Procédé selon la revendication 14,
**caractérisé en ce que** la carte d'identification d'abonné de radiotéléphone mobile (38) transmet à une centrale de télématique de circulation (37) des données fournies par l'appareil supplémentaire de détermination de position (39), comprenant en particulier des informations de position et/ou de direction et/ou de temps, et/ou utilise, pour interprétation et/ou affichage, des données de télématique de circulation reçues d'une centrale de circulation.

16. Procédé selon l'une quelconque des revendications précédentes,
**caractérisé en ce que** le programme sur la carte d'identification d'abonné de radiotéléphone mobile (38) saisit en particulier des données comprenant des informations de position et/ou de direction et/ou de temps venant d'un système de détermination de position, en particulier d'un système GPS, qui est intégré dans un terminal de radiotéléphone mobile dans lequel la carte d'identification d'abonné de radiotéléphone mobile peut être logée.

17. Procédé selon l'une quelconque des revendications précédentes,
**caractérisé en ce que** des données de circulation envoyées d'une centrale de circulation, par l'intermédiaire d'un réseau de radiotéléphone mobile, au terminal de radiotéléphone mobile (33) dans lequel se trouve la carte d'identification d'abonné de radiotéléphone mobile (38) sont traitées dans la carte d'identification d'abonné de radiotéléphone mobile et/ou utilisées pour affichage par l'intermédiaire du terminal de radiotéléphone mobile ou/et d'un appareil supplémentaire de télématique de circulation qui y est raccordé.

18. Procédé selon l'une quelconque des revendications précédentes,
**caractérisé en ce que** la communication entre la carte d'identification d'abonné de radiotéléphone mobile (38) et/ou le terminal de radiotéléphone mobile (33) dans lequel ladite carte (38) se trouve, ainsi qu'une centrale de télématique de circulation, est bidirectionnelle.

19. Procédé selon l'une quelconque des revendications précédentes,
**caractérisé en ce que** la communication entre la carte d'identification d'abonné de radiotéléphone mobile (38) et le terminal de radiotéléphone mobile (33) dans lequel ladite carte se trouve, d'une part, ainsi qu'une centrale de télématique de circulation, d'autre part, s'effectue de manière unidirectionnelle de la centrale de service (36) au terminal de radiotéléphone mobile (33) par transmission de données de circulation (47).

20. Procédé selon l'une quelconque des revendications précédentes,
**caractérisé en ce que** la transmission (37) de données (47) d'une centrale (36) à un terminal de radiotéléphone mobile (33) dans lequel se trouve la carte d'identification d'abonné de radiotéléphone mobile (38) s'effectue sous la forme de messages courts, notamment de SMS GSM.

21. Procédé selon l'une quelconque des revendications précédentes,
**caractérisé en ce qu'**il est vérifié dans la carte d'identification d'abonné de radiotéléphone mobile (38), si, dans une séquence de données reçue d'une centrale (36) par le terminal de radiotéléphone mobile (33), le PID correspond à une séquence d'identification enregistrée dans la carte d'identification d'abonné de radiotéléphone mobile et, dans ce cas, un traitement de la séquence de données de circulation reçue est effectué par un sous-programme de télématique de circulation, en particulier sur la carte d'identification d'abonné de radiotéléphone mobile.

22. Procédé selon l'une quelconque des revendications précédentes,
**caractérisé en ce qu'**il est vérifié dans la carte d'identification d'abonné de radiotéléphone mobile (38), si, dans une séquence de données de circulation reçue d'une centrale de circulation par le radiotéléphone mobile, le paramètre DCS a la valeur « Message Class 2 » et, seulement dans ce cas, un traitement de la séquence de données de circulation reçue est effectué par un sous-programme de télématique de circulation, en particulier sur la carte d'identification d'abonné de radiotéléphone mobile (38).

23. Procédé selon l'une quelconque des revendications précédentes,
**caractérisé en ce qu'**il est vérifié dans la carte d'identification d'abonné de radiotéléphone mobile (38), si une séquence dans les données utiles d'une séquence de données (47) reçue d'une centrale de services (36) dans le terminal de radiotéléphone mobile (33) correspond à un code enregistré dans la carte d'identification d'abonné de radiotéléphone mobile.

24. Procédé selon l'une quelconque des revendications précédentes,
**caractérisé en ce que** des données utiles de télématique de circulation dans le système de fichier GSM sont enregistrées sur la carte séparément de données utiles d'autres applications GSM.

25. Procédé selon l'une quelconque des revendications précédentes,
**caractérisé en ce que**, lors de l'initialisation de la carte, il est vérifié quels modes de fonctionnement la carte et/ou le radiotéléphone mobile dans lequel la carte se trouve supporte, et **en ce que** seuls des sous-programmes adaptés aux modes de fonctionnement supportés peuvent être appelés sur la carte.

26. Procédé selon l'une quelconque des revendications précédentes,
**caractérisé en ce que** des séquences de données de circulation reçues par le terminal de radiotéléphone mobile (33) par radiotéléphonie mobile (37) d'une centrale de services (36), reconnues comme étant relatives à la télématique de circulation, sont transmises à des sous-programmes d'application relatifs à la télématique de circulation sur la carte d'identification d'abonné de radiotéléphone mobile (38), tandis que les autres séquences de données sont transmises au récepteur correspondant sur la carte d'identification d'abonné de radiotéléphone mobile et/ou dans le terminal de radiotéléphone mobile.

27. Procédé selon l'une quelconque des revendications précédentes,
**caractérisé en ce que** des données utiles et/ou des ordres sont envoyés de la carte d'identification d'abonné de radiotéléphone mobile (38) à un appareil supplémentaire (39) par l'intermédiaire de l'interface de radiotéléphone mobile DTE/DCE (32) du terminal de radiotéléphone mobile (33) dans lequel se trouve la carte d'identification d'abonné de radiotéléphone mobile (38).

28. Procédé selon l'une quelconque des revendications précédentes,
**caractérisé en ce qu'**une séquence de données (47) reçue d'une centrale de télématique de circulation dans le terminal de radiotéléphone mobile (33) sous forme de message court est sélectionnée du point de vue de son contenu de télématique de circulation en raison de la page de message court dans laquelle elle se trouve, et seules les séquences de données ainsi sélectionnées sont transmises à des fonctions de télématique de circulation sur la carte d'identification d'abonné de radiotéléphone mobile (38).

29. Procédé selon l'une quelconque des revendications précédentes,
**caractérisé en ce que**, outre des sous-programmes généraux relatifs au GSM et à la télématique de circulation, sont enregistrés sur la carte d'identification d'abonné de radiotéléphone mobile (38) également des sous-programmes rapportés à d'autres applications, en particulier des fonctions de cartes de paiement ou/et de cartes téléphoniques.

30. Procédé selon l'une quelconque des revendications précédentes,
**caractérisé en ce que** des sous-programmes rapportés à différentes applications relatives à la télématique de circulation sont prévus sur la carte d'identification d'abonné de radiotéléphone mobile (38), en particulier des applications relatives à la télématique de circulation de différentes centrales de télématique de circulation.

31. Procédé selon l'une quelconque des revendications précédentes,
**caractérisé en ce que** des données reçues et/ou décodées et/ou à traiter et/ou traitées et/ou à afficher et/ou à transmettre au terminal de radiotéléphone mobile (33) et/ou à transmettre à un appareil supplémentaire de télématique de circulation (39) sur le terminal de radiotéléphone mobile (33) ne sont enregistrées que dans la RAM de la carte d'identification d'abonné de radiotéléphone mobile (38).

32. Procédé selon l'une quelconque des revendications précédentes,
**caractérisé en ce que** des données reçues et/ou décodées et/ou à traiter et/ou traitées et/ou à afficher et/ou à transmettre au terminal de radiotéléphone mobile (33) et/ou à transmettre à un appareil supplémentaire de télématique de circulation (39) sur le terminal de radiotéléphone mobile (33) sont enregistrées dans la RAM et dans l'EEPROM de la carte d'identification d'abonné de radiotéléphone mobile (38).

33. Procédé selon l'une quelconque des revendications précédentes,
**caractérisé en ce que** des zones de mémoire séparées sont utilisées sur la carte d'identification d'abonné de radiotéléphone mobile (38) pour des sous-programmes réalisés sur la carte d'identification d'abonné de radiotéléphone mobile pour différentes applications d'un prestataire de services de télématique de circulation et/ou de plusieurs prestataires de services de télématique de circulation et/ou de fournisseurs de cartes de paiement et/ou d'autres fournisseurs d'autres séquences de données (47) pouvant être reçues et/ou demandées par l'intermédiaire du terminal de radiotéléphone mobile (33).

34. Procédé selon l'une quelconque des revendications précédentes,
**caractérisé en ce qu'**il est prévu sur la carte d'identification d'abonné de radiotéléphone mobile (38) une zone de mémoire séparée pour des données accessibles de l'extérieur par un accès d'écriture et de lecture pour des informations non confidentielles, une zone de mémoire séparée pour des données en lecture seule sans autorisation d'accès par des messages arrivant dans la carte d'identification d'abonné de radiotéléphone mobile, en particulier des données de connexion, une zone de mémoire séparée pouvant être lue et décrite de l'extérieur seulement avec une autorisation d'accès et/ou un code par des messages arrivant dans la carte d'identification d'abonné de radiotéléphone mobile.

35. Procédé selon l'une quelconque des revendications précédentes,
**caractérisé en ce que** l'appel de fonctions de cartes à puces non standardisées s'effectue par l'intermédiaire de mémoires normalisées et/ou d'ordres de lecture de la carte d'identification d'abonné de radiotéléphone mobile (38).

36. Procédé selon l'une quelconque des revendications précédentes,
**caractérisé en ce que** l'appel de fonctions de cartes non normalisées pour radiotéléphone mobile s'effectue par l'intermédiaire d'interfaces matériel et/ou logiciel normalisées de radiotéléphone mobile.

37. Procédé selon l'une quelconque des revendications précédentes,
**caractérisé en ce que** le procédé supporte des terminaux de radiotéléphone mobile (33) suivant les standards des phases 1, 2, 2 + et des terminaux de radiotéléphone mobile compatibles.

38. Procédé selon l'une quelconque des revendications précédentes,
**caractérisé en ce que** le programme est enregistré sur une carte SIM GSM.

39. Procédé selon l'une quelconque des revendications précédentes,
**caractérisé en ce que** la carte d'identification d'abonné de radiotéléphone mobile (38) présente un processeur pour exécuter le programme conçu pour être exécuté par ce processeur.

40. Procédé selon l'une quelconque des revendications précédentes,
**caractérisé en ce que** la carte d'identification d'abonné de radiotéléphone mobile (38) présente un routeur (13) pour transmettre des données entrant dans la carte d'identification d'abonné de radiotéléphone mobile, en particulier des messages courts (47), lequel est conçu de façon à transmettre des données relatives aux fonctions de radiotéléphone mobile normalisées à des fonctions de radiotéléphone mobile normalisées et des données relatives à des applications spéciales (47) à l'application spéciale concernée (21 à 24).

41. Procédé selon la revendication 40,
**caractérisé en ce que** le routeur servant à transmettre des données est un sous-programme sur la carte d'identification d'abonné de radiotéléphone mobile.

42. Procédé selon l'une quelconque des revendications précédentes,
**caractérisé en ce que**, sur la carte d'identification d'abonné de radiotéléphone mobile (38), sont intégrées toutes les fonctions, en particulier en tant que programme, qui sont nécessaires pour pouvoir exécuter une application spéciale, en particulier une application de télématique de circulation, seulement sur la carte d'identification d'abonné de radiotéléphone mobile en liaison avec un terminal de radiotéléphone mobile (33) dans lequel elle se trouve.

43. Procédé selon l'une quelconque des revendications précédentes,
**caractérisé en ce que** la carte d'identification d'abonné de radiotéléphone mobile (38) présente des fonctions qui permettent une utilisation d'appareils supplémentaires de télématique de circulation (39) pouvant être raccordés à un terminal de radiotéléphone mobile (33) dans lequel elle se trouve, pour l'entrée de données à interroger et/ou la sortie de données entrantes (47) et/ou la localisation.
